# EUROPEAN PATENT APPLICATION

(11) **EP 2 611 175 A1**
(43) Date of publication of application: **03.07.2013**
(21) Application number: 12193930.0
(22) Date of filing: 22.11.2012
(51) Int. Cl.: H04N 13/04

(54) **Display apparatus and method for converting display mode thereof**

(30) Priority: 29.12.2011 KR 20110146559; 30.12.2011 KR 20110147533; 04.06.2012 KR 20120059968; 12.10.2012 KR 20120113812
(71) Applicant: Samsung Electronics Co., Ltd., Gyeonggi-do 443-742 (KR)
(72) Inventor: Bae, Simon, Gyeonggi-do (KR); Jang, Sung-chang, Gyeonggi-do (KR)
(74) Representative: Robinson, Ian Michael

(57) **Abstract**

A display apparatus is provided having a plurality of receiving units (110) which receive a plurality of contents. A signal processing unit (120) composes image frames by processing each of the plurality of contents. A display unit (130) outputs a plurality of content views by combining image frames of each content. A sync signal generating unit (140) generates a sync signal for synchronizing the plurality of content views and with a plurality of glasses apparatuses (200). An interface unit (150) transmits the sync signal to the glasses apparatus (200). A control unit (160) operates in one of a single view mode and a multi view mode and performs mode conversion in accordance with an operation status of each of the plurality of glasses apparatuses (200)

## Description

### CROSS-REFERENCE TO RELATED APPLICATIONS

This application claims priority from Korean Patent Application No. 10-2011-0146559, filed in the Korean Intellectual Property Office on December 29, 2011; Korean Patent Application No. 10-2011-0147533, filed in the Korean Intellectual Property Office on December 30, 2011; and Korean Patent Application No. 10-2012-0059968, filed in the Korean Intellectual Property Office on June 4, 2012, respectively.

### BACKGROUND

### 1. Field

Aspects of the exemplary embodiments relate to a glasses apparatus, a display apparatus, and a content providing method using the same, and more particularly, to an glasses apparatus which is capable of providing different contents to a plurality of users, a display apparatus, and a method for providing contents using the same.

In addition, another aspect of the exemplary embodiments relates to a display apparatus which performs mode conversion based on a respective operational state of a glasses apparatus, and a method for converting mode thereof.

Aspects of the present invention relate to a display apparatus and a controlling method thereof, and more particularly, to a display apparatus which may create a multi-purpose-multi-view display environment by restricting or releasing sharing of a contents view from among a plurality of contents views and a controlling method thereof.

### 2. Description of the Related Art

Generally, a left eye image and a right eye image are displayed alternately to realize a three-dimensional (3D) display, such as a stereoscopic 3D projector or 3D flat panel display. In order to display a left eye image and a right eye image exactly in coordination with a left eye and a right eye respectively, thereby realizing a 3D display, a specially-designed display system is required.

With the development of digital technology, various types of electronic products have been developed and provided. In particular, various display apparatuses such as a television, a mobile phone, a personal computer (PC), a notebook PC, and a personal digital assistant (PDA) have been widely used in residential households.

As such display apparatuses have been widely used, user needs for various functions have also increased. Accordingly, manufacturers have made an effort to meet such user needs by providing products with new functions.

In particular, there are increasing needs for technology which allows a plurality of users to view desired contents by using a single public display apparatus. The goal of a display apparatus is basically to provide a vivid image to users. To this end, a display apparatus needs to provide a large and clear image which, to the greatest possible extent, falls within in a field of vision of human beings. Many personal display apparatuses such as a PC and a smart phone also provide various solutions to realize such a goal. However, as a personal display apparatus is designed to be mobile, there is a limit to the size of a display screen, thus making it difficult to provide a perfect display environment. Conversely, although a public display apparatus such as a television or a large display screen does not have the same limitation in the delivery of an image that a personal display apparatus has, such a public display apparatus cannot provide personalized contents to each viewer. Therefore, a technology for providing contents suitable for each individual, from among various contents, in a vivid image, by using a single public display apparatus is required.

In order to use a public display apparatus as a personal display apparatus, various technologies should be converged. In particular, such extension of a public display apparatus should be optimized to replace the functions of a personal display apparatus. To this end, not only the functions of a personal display apparatus but also the interface should be considered.

When using such a display apparatus, however, a user may watch only a single content that he or she wants, and may not know what other users are watching. Accordingly, a method for checking the contents viewed by other users conveniently by performing simple manipulations is required.

In addition, while a plurality of content views are outputted, a glasses apparatus connected to one content view may be turned off. In particular, if a plurality of content views are outputted alternately, the number of image frames of each content view is reduced by half and thus, display resolution may be deteriorated, providing unclear images by comparison with a situation in which a single content view is outputted. Further, as image data relating to different content views is received and each image requires processing, power loss may also arise as a significant problem. Therefore, if a plurality of content views are outputted and more than one single glasses apparatus is turned on/off so that the number of content views which are synchronized with the glasses apparatus is reduced, the number of content views should be reduced correspondingly, or the mode should be converted to a single view mode. However, even if different content views are outputted, a user watching a single content view may not know the viewing state of other views and thus, the display apparatus should be designed to recognize how many content views are reduced, reduce the number of content views, and/or change the current mode to a single view mode.

### SUMMARY

According to the present invention there is provided a display apparatus and a method as set forth in the appended claims. Other features of the invention will be apparent from the dependent claims, and the description which follows. Aspects of the exemplary embodiments relate to an apparatus and a method for processing an image which allow a stereoscopic image to be recognized by a left eye and a right eye accurately and an apparatus and a method for displaying using the same.

A glasses apparatus interlocked with a display apparatus which displays a plurality of contents alternately, according to an exemplary embodiment, includes an interface unit which performs communication with the display apparatus, an input unit which receives a user command to perform a connection operation with at least one communication module in the display apparatus, and a control unit which, if the user command is input, controls the interface unit to receive a sync signal corresponding to one of the plurality of contents by performing a connection operation with the at least one communication module.

The apparatus may further include a first shutter glasses unit, a second shutter glasses unit, and a shutter glasses driving unit which opens the first shutter glasses unit and the second shutter glasses unit in accordance with a display timing of one of the plurality of contents based on a sync signal received from the display apparatus.

The control unit, if the user command is input while the at least one communication module is connected and a sync signal corresponding to one of the plurality of contents is received, may control the interface unit to receive a sync signal corresponding to another content from among the plurality of contents.

The at least one communication module in the display apparatus may be a first Bluetooth communication module, and the interface unit may include a second Bluetooth communication module which performs communication with the first Bluetooth communication module.

The input unit may include a plurality of switching buttons which receive a user command to perform a connection operation with the at least one communication module.

The control unit may control the second Bluetooth communication module to perform pairing with the first Bluetooth communication module whenever each of the plurality of switching buttons is touched in order to receive a sync signal corresponding to different contents.

A method for providing contents in a glasses apparatus interlocked with a display apparatus which displays a plurality of contents alternately, according to an exemplary embodiment, includes receiving a user command to perform a connection operation with at least one communication module in the display apparatus, if a user command is input, performing a connection operation with the at least one communication module, and if the connection operation is performed, receiving a sync signal corresponding to one of the plurality of contents.

The method may further include opening a first shutter glasses unit and a second shutter glasses unit in accordance with a display timing of one of the plurality of contents based on a sync signal received from the display apparatus.

The performing a connection operation may include, if the user command is input while the at least one communication module is connected and a sync signal corresponding to one of the plurality of contents is received, receiving a sync signal corresponding to another content from among the plurality of contents by performing a connection operation with the at least one communication module.

The at least one communication module in the display apparatus may be a first Bluetooth communication module, and the glasses apparatus may perform communication with the first Bluetooth communication module using a second Bluetooth communication module.

The glasses apparatus may include a plurality of switching buttons which receive a user command to perform a connection operation with the at least one communication module.

The performing a connection operation may include controlling the second Bluetooth communication module to perform pairing with the first Bluetooth communication module in the display apparatus whenever each of the plurality of switching buttons is touched.

A display apparatus, according to an exemplary embodiment, includes a plurality of receiving units which receive each of different contents, a plurality of signal processing units which compose image frames by processing each of contents received from the plurality of receiving units, a display unit which disposes and displays image frames of each content composed by the plurality of signal processing units alternately, a sync signal generating unit which generates a sync signal which synchronizes a glasses apparatus corresponding to each content in accordance with a display timing of each content, an interface unit which includes at least one communication module, and a control unit which controls to transmit the sync signal as the at least one communication module performs a connection operation with the glasses apparatus in accordance with a user command received from the glasses apparatus.

The control unit, if the user command is received while the at least one communication module is connected to the glasses apparatus, may control to transmit a different sync signal as the at least one communication module performs a connection operation with the glasses apparatus.

The at least one communication module may be a first Bluetooth communication module, and the control unit may control to transmit the sync signal as the first Bluetooth communication module performs pairing with a second Bluetooth communication module in the glasses apparatus in accordance with the user command.

A method for providing contents in a display apparatus, according to an exemplary embodiment, includes disposing and displaying a plurality of different contents alternately, generating a sync signal which synchronizes a glasses apparatus corresponding to each of the contents in accordance with a display timing of each content, performing a connection operation between at least one communication module and a glasses apparatus in accordance with a user command received from the glasses apparatus, and transmitting the sync signal using a communication channel where the connection operation is completed.

The performing a connection operation may include, if the user command is input while the at least one communication module is connected to the glasses apparatus, performing a connection operation between the at least one communication module and the glasses apparatus so as to transmit a different sync signal.

The at least one communication module may be a first Bluetooth communication module, and the performing a connection operation may include performing pairing between the first Bluetooth communication module with a second Bluetooth communication module in the glasses apparatus in accordance with the user command.

According to the various exemplary embodiments, the contents that other users are watching may be easily identified.

Another aspect of the present invention relates to a display apparatus which performs mode conversion in accordance with an operation status of each of a plurality of glasses apparatuses and a method for converting a mode thereof.

A display apparatus, according to an exemplary embodiment, includes a plurality of receiving units which receive a plurality of contents, a signal processing unit which composes image frames by processing each of the plurality of contents, a display unit which outputs a plurality of content views by combining image frames of each content, a sync signal generating unit which generates a sync signal for synchronizing the plurality of content views and a plurality of glasses apparatuses, an interface unit which transmits the sync signal to the glasses apparatus, and a control unit which operates in one of a single view mode and a multi view mode and performs mode conversion in accordance with an operation status of each of the plurality of glasses apparatuses.

The control unit may convert a mode to the single view mode if a glasses apparatus matched with content views except for one of the plurality of content views is turned off while being operated in the multi view mode.

The multi view mode may be divided into a plurality of multi view modes in accordance with a number of the content views, and the control unit may convert a mode to a multi view mode corresponding to a number of remaining content views if a glasses apparatus matched with at least one content view is turned off while being operated in one of the plurality of multi view modes.

A mode converting method in a display apparatus, according to an exemplary embodiment, includes receiving a plurality of contents, composing image frames by processing each of the plurality of contents, outputting a plurality of content views by combining image frames of each content, generating a sync signal for synchronizing the plurality of content views and a plurality of glasses apparatuses, transmitting the sync signal to the glasses apparatus, and performing mode conversion in accordance with an operation status of each of the plurality of glasses apparatuses.

The performing mode conversion may include converting a mode to a single view mode if a glasses apparatus matched with content views except for one of the plurality of content views is turned off.

The performing mode conversion may include converting a mode to a multi view mode corresponding to a number of remaining content views if a glasses apparatus matched with at least one content view from among the plurality of content views is turned off.

According to various exemplary embodiments, mode conversion of a display apparatus is performed in accordance with an operation status of each of a plurality of glasses apparatuses and thus, a user may watch a clear image and reduce waste of power.

### BRIEF DESCRIPTION OF THE DRAWINGS

The above and/or other aspects of the present disclosure will be more apparent by describing certain exemplary embodiments with reference to the accompanying drawings, in which:

FIGS. 1 and 2 are views which illustrate a configuration of a content providing system according to an exemplary embodiment:

FIGS. 3 and 4 are views which illustrate a method for transmitting a sync signal according to various exemplary embodiments;

FIG. 5 is a block diagram which illustrates a configuration of a display apparatus according to various exemplary embodiments;

FIG. 6 is a block diagram which illustrates a configuration of a signal processor;

FIG. 7 is a block diagram which illustrates a configuration of a glasses apparatus according to various exemplary embodiments;

FIG. 8 is a block diagram which illustrates a configuration of a glasses apparatus according to various exemplary embodiments;

FIG. 9 is a block diagram which illustrates a detailed configuration of a glasses apparatus according to various exemplary embodiments;

FIG. 10 is a flowchart which illustrates a content providing method which is executable by using a display apparatus according to various exemplary embodiments;

FIG. 11 is a flowchart which illustrates a content providing method which is executable by using a glasses apparatus according to various exemplary embodiments;

FIG. 12 is a concept view which illustrates an output of a display apparatus when a single content view of the display apparatus is turned off;

FIGS. 13 and 14 are flowcharts which illustrate a method for converting a mode in a display apparatus according to various exemplary embodiments;

FIG. 15 is a concept view which illustrates an output of an image when a mode is converted in a display apparatus,

FIG. 16 is a block diagram which illustrates a configuration of a glasses apparatus according to various exemplary embodiments;

FIG. 17 is a view which illustrates an exemplary embodiment of a system through which a polarized image can be viewed;

FIG. 18 is a view which is provided to explain a pattern retarder method;

FIG. 19 is a view which illustrates another exemplary embodiment of a pattern retarder method;

FIG. 20 is a view which illustrates an exemplary embodiment of a multi-view method by displaying image frames alternately; and

FIG. 21 is a block diagram which illustrates a configuration of a glasses apparatus based on a polarized light method according to various exemplary embodiments.

### DETAILED DESCRIPTION

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. In addition, well-known functions or constructions are not described in detail since they would obscure the application with unnecessary detail.

### Configuration of Display Apparatus 100

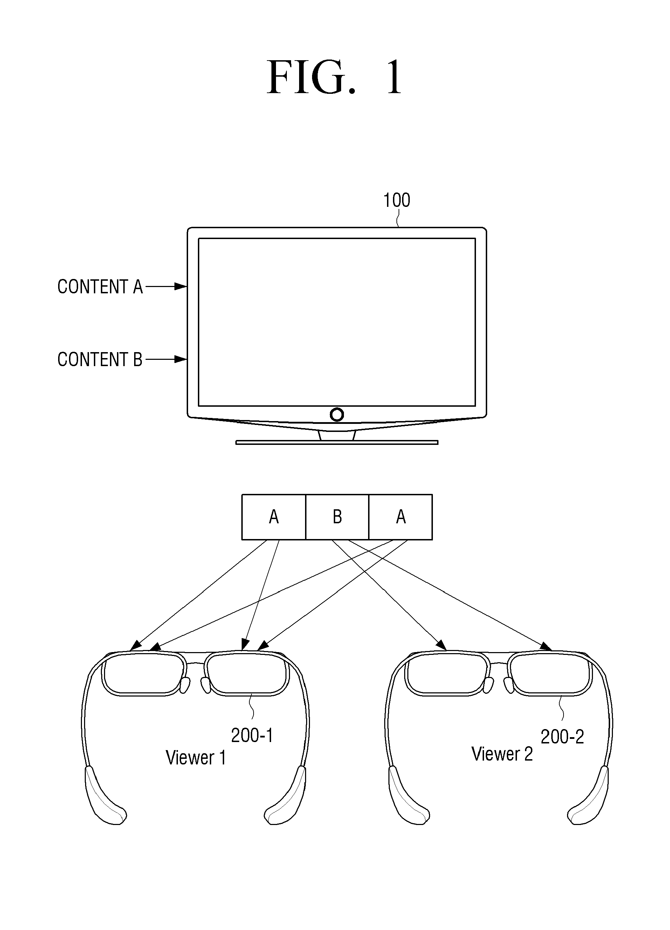

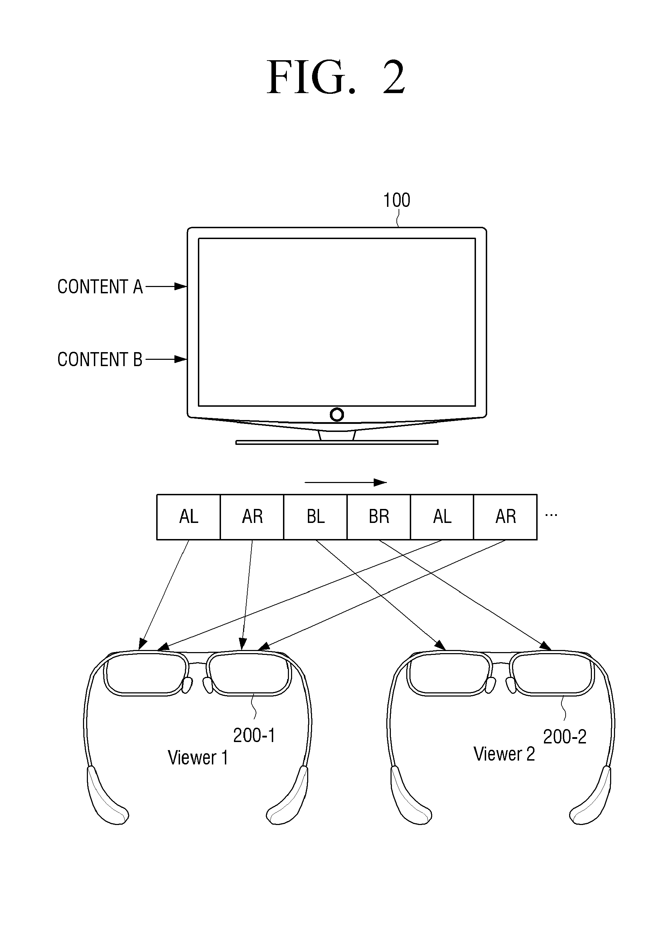

FIGS. 1 and 2 are views which illustrate a configuration of a content providing system according to an exemplary embodiment. As illustrated in FIGS. 1 and 2, a content providing system 1000 comprises a display apparatus 100 and a plurality of glasses apparatuses 200-1, 200-2.

The display apparatus 100 combines and displays a plurality of different contents, and each of a plurality of glasses apparatuses 200-1, 200-2 receives only a content image which is displayed by the display apparatus 100. The combining and displaying of contents may be accomplished by composing an image frame by combining contents and displaying the composed image frame, or by displaying contents alternately. Herein, the displaying a plurality of contents alternately refers to displaying a frame having image formation regarding a first subset of contents first and then, displaying a frame having image formation regarding a second subset of contents, so as to alternate a display of frames having image information regarding the different subsets of contents between the first and second subsets of contents.

FIG. 1 is a view which illustrates a method for providing a plurality of 2D contents according to an exemplary embodiment.

The display apparatus 100 displays a plurality of 2D contents, including content A and content B, generates a sync signal for synchronizing glasses apparatuses 1, 2 (200-1, 200-2) corresponding to each content, and transmits the sync signal to the glasses apparatuses 1, 2 (200-1, 200-2).

In this case, the glasses apparatus 1 (200-1) may operate to open both left shutter glasses and right shutter glasses when a first content, i.e., content A, is displayed in accordance with the sync signal, and to close both left shutter glasses and right shutter glasses when a second content, i.e., content B, is displayed. Accordingly, a user wearing the glasses apparatus 1 (200-1) may watch only content A, which is synchronized with the glasses apparatus 1 (200-1), from among a plurality of contents A, B which are displayed alternately. Likewise, the glasses apparatus 2 (200-2) may be synchronized with respect to content B, and a user wearing the glasses apparatus 2 (200-2) may watch only content B. As image frames regarding different contents are alternately displayed at a fast speed and an afterimage effect on a retina persists while a lens is closed, the sequence of images watched by each user may be presented as a smooth sequence.

FIG. 2 is a view which illustrates a method for providing a plurality of 3D contents according to an exemplary embodiment.

As illustrated in FIG. 2, if a plurality of 3D contents, including content A and content B, are 3D contents, the display apparatus 100 displays the plurality of 3D contents (i.e., content A and content B) alternately while displaying a left eye image and a right eye image of each 3D content alternately.

For example, the display apparatus 100 may display a left eye image AL and a right eye image AR of 3D content A, and display a left eye image BL and a right eye image BR of 3D content B, alternately. In this case, the glasses apparatus 1 (200-1) may open left eye glasses when a left eye image AL of 3D content A is displayed, and the glasses apparatus 1 (200-1) may open right eye glasses when a right eye image AR of 3D content A i displayed, and the glasses apparatus 2 (200-2) may open left eye glasses when a left eye image BL of content B is displayed, and the glasses apparatus 2 (200-2) may open right eye glasses when a right eye image BR of 3D content B is displayed.

The display apparatus 100 according to various exemplary embodiments may include any of various apparatuses having a display unit, such as television, mobile phone, PDA, notebook PC, monitor, tablet PC, electronic book, electronic picture frame, and kiosk.

Accordingly, a user wearing the glasses apparatus 1 (200-1), i.e., viewer 1, watches only 3D content A, and a user wearing the glasses apparatus 2 (200-2), i.e., viewer 2, watches only 3D content B.

However, the above-described method is applicable only to a method relating to the use of shutter glasses, and in the case of a polarization method, the respective directions of the glasses apparatuses 1 and 2 may be configured to be consistent with the respective direction of polarization of each of a plurality of content images, thereby supporting a multi view mode, as will be readily understood by those skilled in the related art.

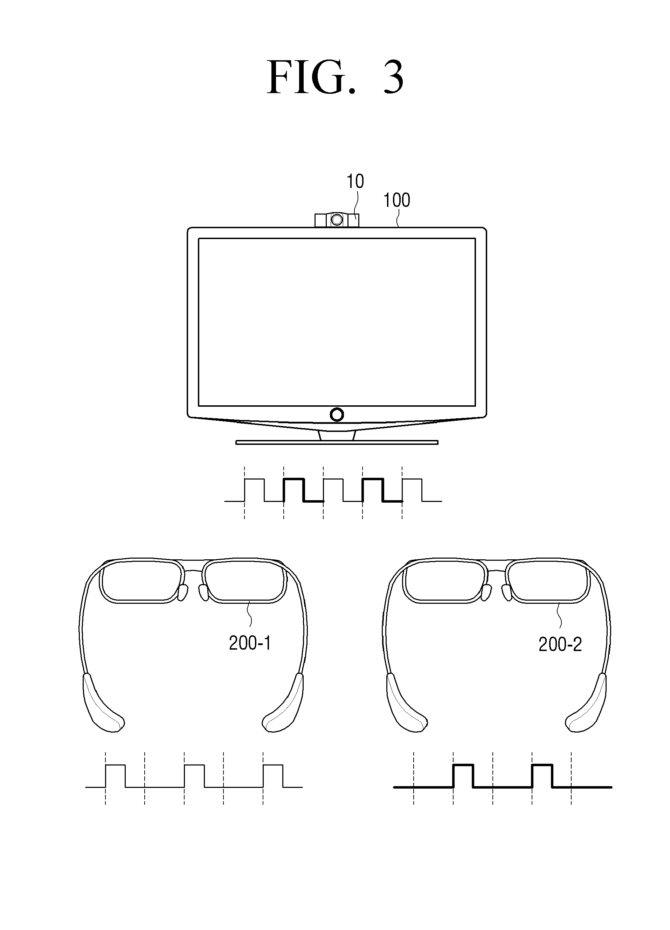

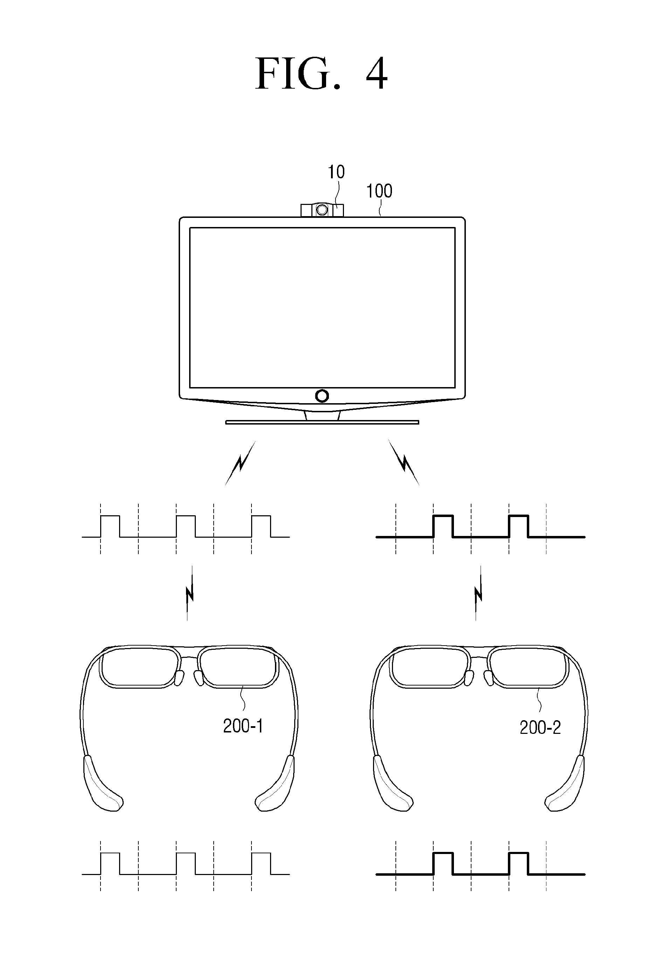

FIGS. 3 and 4 are views which illustrate a method for transmitting a sync signal according to various exemplary embodiments.

According to FIG. 3, the display apparatus 100 may perform broadcasting or multi-casting of a single signal which multiplexes a sync signal corresponding to the glasses apparatus 1 (200-1) and the glasses 2 (200-2), and each of the glasses apparatuses 200-1, 200-2 may be synchronized with a sync signal in response to a user command such as, for example, a command to change a channel, from among corresponding channels to operate to open and close shutter glasses in accordance with a display timing based on the sync signal. A sync signal transmitter 10 transmits the sync signal to the glasses apparatuses 200-1, 200-2.

However, this is only an example, and as illustrated in FIG. 4, the display apparatus 100 may be configured to perform uni-casting of respective sync signals corresponding to the glasses apparatus 1 (200-1) and the glasses apparatus 2 (200-2). In particular, the sync signal transmitter 10 may transmit a first sync signal to the first glasses apparatus 200-1, and the sync signal transmitter 10 may transmit a second sync signal to the second glasses apparatus 200-2, and the corresponding glasses apparatuses 200-1, 200-2 may be configured to receive the corresponding sync signals.

In an exemplary embodiment, the sync signal may be configured in the form of a Radio Frequency (RF) signal or an infrared (IR) signal, and further description will be provided below.

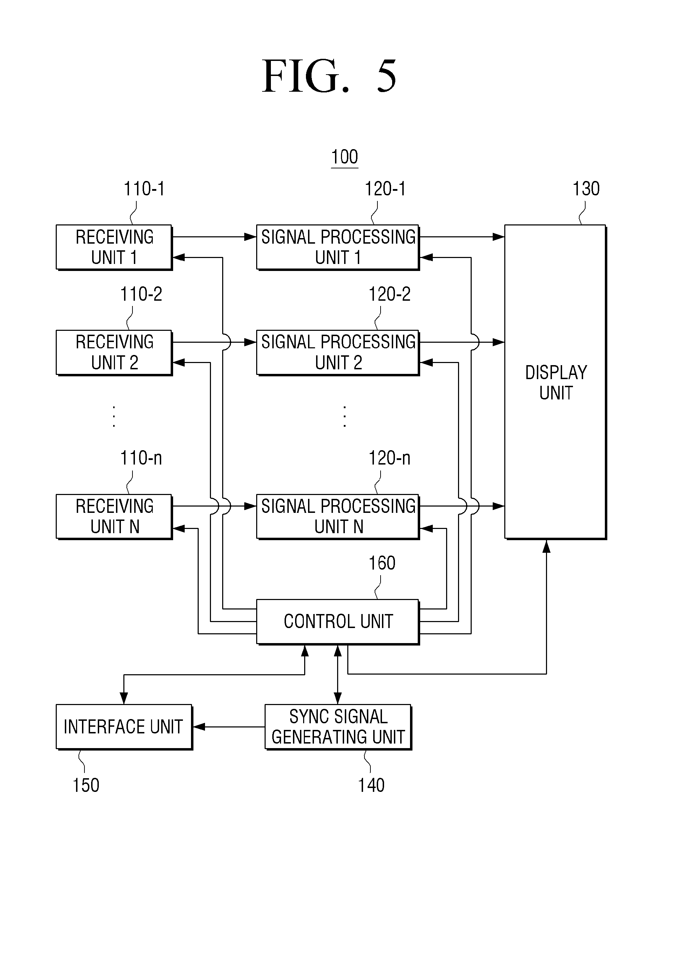

FIG. 5 is a block diagram which illustrates a configuration of a display apparatus according to various exemplary embodiments.

According to FIG. 5, the display apparatus 100 comprises a plurality of receivers 110-1, 110-2, ..., 110-n, a plurality of signal processors 120-1, 120-2, ..., 120-n, a display 130, a sync signal generator 140, an interface 150, and a controller 160.

Each respective receiver of the plurality of receivers 110-1, 110-2, ..., 110-n receives at least one respective content of a plurality of contents. Specifically, each receiver 110-1, 110-2, ..., 110-n receives contents from a broadcast station which transmits broadcast program contents by using a broadcast network, or from a web server which transmits content files by using the Internet. In addition, the display apparatus 100 may receive contents from any of various recording medium reproduction apparatuses within the display apparatus 100 or connected to the display apparatus 100. The recording medium reproduction apparatus may include any type of apparatus which reproduces contents stored in various types of recording media, such as, for example, a compact disk (CD), a digital versatile disk (DVD), a hard disk, a Blu-ray disk, a memory card and a universal serial bus (USB) memory.

In the case in which contents are received from a broadcast station, at least one receiver of the plurality of receivers 110-1, 110-2, ..., 110-n may be configured to include a tuner (not shown), a demodulator (not shown), and an equalizer (not shown). Alternatively, in the case in which contents are received from a source such as a web server, at least one receiver of the plurality of receivers 110-1, 110-2, ..., 110-n may be realized as a network interface card (not shown). In a case in which contents are received from the various types of recording medium reproduction apparatuses, at least one receiver of the plurality of receivers 110-1, 110-2, ..., 110-n may be realized as an interface which is connected to at least one of the recording medium reproduction apparatuses. For example, at least one of the plurality of receivers 110-1, 110-2, ..., 110-n may be configured as an AV terminal, a COMP terminal, and/or an HDMI terminal.

In particular, each receiver of the plurality of receivers 110-1, 110-2, ..., 110-n may be realized as various forms depending on exemplary embodiments.

Each receiver of the plurality of receivers 110-1, 110-2, ..., 110-n may not necessarily receive contents from the same type of source, and instead, respective receivers may receive contents from different types of sources.

Each respective signal processor of the plurality of signal processors 120-1, 120-2, ..., 120-n may process various signals with respect to each of the contents received from the corresponding receiver of the plurality of receivers 110-1, 110-2, ..., 110-n.

In particular, each respective signal processor of the plurality of signal processing units 120-1, 120-2, ..., 120-n may process each of the received contents to be in the form of image frames and adjust a respective brightness of each of the processed contents in the form of image frames.

Further, according to various exemplary embodiments, the display apparatus 100 may further comprise a multiplexer (not shown) which multiplexes image frames. A multiplexer may multiplex and output image frames such that the respective image frames of each of the first content, second content, ..., nth content may be disposed sequentially.

The display 130 displays a plurality of contents in accordance with data outputted from a multiplexer (not shown). Accordingly, the display 130 may display image frames such that at least one image frame of each content may be displayed sequentially.

The display 130 outputs one content view in a single view mode, and combines and outputs a plurality of content views in a multi view mode.

Herein, the display 130 may be realized, for example, as at least one of a Liquid Crystal Display (LCD) panel, plasma display panel, Organic Light Emitting Diodes (OLED), Vacuum Fluorescent Display (VFD), Field Emission Display (FED), and Electro Luminescence Display (LED). The display 130 may be realized as a form in the exemplary embodiment below.

As described above, the mode in which an image frame of each content is disposed sequentially may be referred to as a multi view mode (or a dual view mode). The display apparatus 100 may process contents by activating one of the plurality of receivers 110-1, 110-2, ..., 110-n when the display apparatus 100 is operated in a general mode (or single view mode) in which only one of 2D contents and 3D contents is displayed. If a user selects a multi view mode while the display apparatus 100 is being operated in a general mode, the display apparatus 100 may process data by activating the remaining receivers, as described above.

Further, the above-mentioned contents may be 2D contents or 3D contents. The 3D contents are contents which tend to provide a stereoscopic perception to a user by using a multi view sequence of images which are projected from different perspectives.

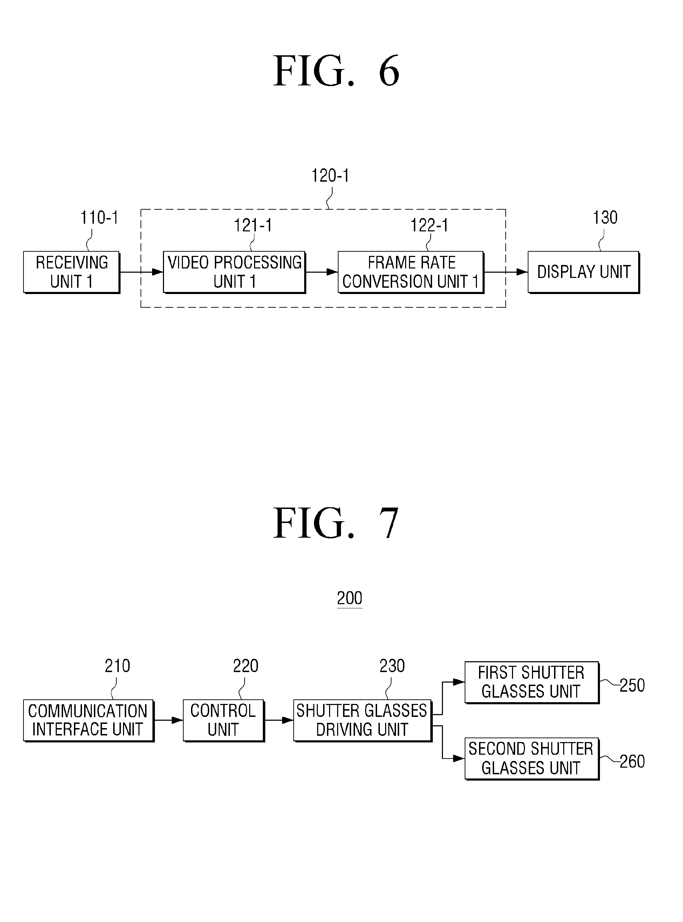

Referring also to FIG. 6, if a plurality of 3D contents are used, the display 130 may multiplex left eye images and right eye images included in each 3D content and provided by a plurality of frame rate conversion components 122-1, 122-2, ..., 122-n in a predetermined disposition form, and display the respective left eye images and right eye images in a sequence based on the predetermined disposition form with image frames of other contents.

Accordingly, the images are disposed and displayed in the order of the left eye image of the first content, the right eye image of the first content, the left eye image of the second content, the right eye image of the second content, ... the left eye image of the nth content, and the right eye image of the nth content, and a user may recognize the left eye image and the right eye image of one particular content by using the glasses apparatus 200.

In an exemplary embodiment, the display apparatus 100 further comprises a component for providing respective audio data included in each content for each user when the display apparatus 100 is operated in multi view mode. In particular, the display apparatus 100 may further include a de-multiplexer (not shown) for dividing video data and audio data from contents received from each of the receivers 110-1, 110-2, ..., 110-n, an audio decoder (not shown) for decoding the divided audio data, a modulator (not shown) for modulating each of the decoded audio data to respective signals having respective frequencies, and a display (not shown) for transmitting the modulated audio data to a glasses apparatus.

Each of the sets of audio data which is outputted from the display 130 is provided to a user via an output means, such as an earphone, which is provided in conjunction with a glasses apparatus. Such a component is not directly related to the present exemplary embodiments, so the output means will not be illustrated.

Further, if additional information such as an Electronic Program Guide (EPG) and subtitles are included in contents, a de-multiplexer may further separate the additional data from the contents. In addition, the display apparatus 100 may add an image frame which includes subtitles which are processed to be displayable via an additional data processor (not shown) in an image frame.

The sync signal generator 140 generates a sync signal which synchronizes a glasses apparatus in correspondence with each respective content in accordance with a display timing of each respective content. In particular, the sync signal generator 140 generates a sync signal for synchronizing a glasses apparatus based on a display timing of an image frame regarding a content in a multi view mode.

The interface 150 transmits a sync signal to a glasses apparatus. In this case, the interface 150 may transmit a sync signal to a glasses apparatus in various ways.

For example, the interface 150 may communicate with a glasses apparatus by using an RF communication module. Herein, the RF communication module may be realized as a Bluetooth communication module. Accordingly, the interface 150 may generate a transmission stream in accordance with Bluetooth communication standards to include a sync signal, and transmit the transmission stream to a glasses apparatus.

In particular, the transmission stream includes time information relating to an operation of opening and closing shutter glasses of a glasses apparatus by being synchronized in accordance with a display timing for each respective content. Specifically, the transmission stream may include information regarding a first offset time to open left eye shutter glasses of a glasses apparatus from a reference time set for each content, a second offset time to close left eye shutter glasses, a third offset time to open right eye shutter glasses, and a fourth offset time to open right eye shutter glasses. Herein, the reference time refers to a point in time when a vertical sync signal occurs in an image frame of each respective content, and time information relating to the point in time when the vertical sync signal occurs may also be included in the transmission stream.

In order to perform communication according to a Bluetooth communication method, the interface 150 performs a respective pairing with each glasses apparatus. Once the respective pairing operation is completed, information relating to the corresponding glasses apparatus, for example, an apparatus ID (or address) may be registered. The interface 150 generates one transmission stream in accordance with Bluetooth communication standards by synchronizing a display timing of each respective content with information regarding a corresponding glasses apparatus. For example, the interface 150 may synchronize a display timing of each respective content with information regarding different glasses apparatuses in the order of arranged image frames of the respective contents. In particular, if two sets of contents are provided alternately in a multi view mode, the display timing of the image frames of the first, the third, ..., the nth contents is synchronized with information regarding the first glasses apparatus, and the display timing of the image frames of the second, the fourth, ..., the n+1 contents may be synchronized with information regarding the second glasses apparatus (herein, n is an odd number). When a sync signal is received, the respective glasses apparatus checks a display timing corresponding to its own glasses apparatus information, and may open or close shutter glasses in accordance with the display timing.

As an exemplary embodiment, the interface unit 160 may have a plurality of Bluetooth addresses, and one glasses apparatus may be connected to one Bluetooth address. In this case, a Bluetooth address may be assigned to each glasses apparatus in an ascending or in a descending order according to the order where the glasses apparatus 200 is connected to the interface unit 160. The interface unit 160 may be set to exclude a Bluetooth address which is used for the connection with the glasses apparatus 200 in order to prevent another glasses apparatus from being connected.

In the above exemplary embodiment, the interface 150 communicates with a glasses apparatus by using a Bluetooth communication method, but this is only an example. In particular, other than the Bluetooth communication method, communication methods such as infrared communication and Zigbee may be used. In addition, communication may be performed by using any of various wireless communication methods which enables transmitting/receiving a signal by forming a communication channel within a short distance.

In an exemplary embodiment, the interface 150 may provide a glasses apparatus with an IR sync signal having different frequencies. In this case, the glasses apparatus may receive a sync signal having a specific frequency and open or close shutter glasses in accordance with a respective display timing of corresponding contents.

In this case, the interface 150 may transmit an IR signal in which a high level during a first period and a low level during a second period are repeated periodically at predetermined time intervals based on sync information to the glasses apparatus. The glasses apparatus may be configured to open shutter glasses during the high level of the first period and close shutter glasses during the low level of the second period. However, this is just one example of a sync signal configuration; alternatively, a sync signal may be generated in various ways.

In the above exemplary embodiment, the interface unit 150 is realized as a single communication module and performs communication with a plurality of glasses apparatuses, but the interface unit 150 may be realized as a plurality of communication modules which performs communication with each of the glasses apparatuses separately depending on exemplary embodiments. Alternatively, if the display apparatus 100 supports a plurality of wireless communication methods, the interface unit 160 may be configured to include a plurality of communication modules according to each of the different wireless communication methods. The wireless communication method is the same as the exemplary embodiment described above.

The controller 160 controls overall operations of the display apparatus 100. Specifically, the controller 160 controls each of the plurality of receivers 110-1, 110-2, ..., 110-n, the plurality of signal processors 120-1, 120-2, ..., 120-n, the multiplexer (not shown), the display 130, the sync signal generator 140, and the interface 150 to perform corresponding operations. As the operations of each component of the display apparatus have been described above, further description will not be provided.

FIG. 6 is a block diagram which illustrates a configuration of the signal processor 120.

Referring to FIG. 6, a particular signal processor 120-1 may comprise a video processor 121-1 and a frame rate conversion component 122-1.

The video processor 121-1 performs signal processing with respect to video data included in received contents. Specifically, the video processor 121-1 may comprise a decoder (not shown) for decoding video data and a scaler (not shown) for performing up-scaling or down-scaling in accordance with a screen size of the display 130.

In addition, the video processor 121-1 may convert video data to be in a data format corresponding to the frame rate conversion component 122-1. For example, video data may be converted to be in a side-by-side formation in which image frames of each respective content are arranged side by side in a horizontal direction.

The frame rate conversion component 122-1 converts a frame rate of contents provided by the video processor 121-1 to be compatible with a multi content display rate with reference to an output rate of the display apparatus 100. Specifically, if the display apparatus 100 operates at 60Hz, the frame rate conversion unit 122-1 may convert the frame rate of each respective content to be n×60Hz.

### Configuration of Glasses Apparatus

FIG. 7 is a block diagram which illustrates a configuration of the glasses apparatus 200 according to various exemplary embodiments.

Referring to FIG. 7, the glasses apparatus 200 interlocks with the display apparatus 100 which displays a plurality of contents sequentially by image frame unit, and comprises a communication interface 210, a controller 220, a shutter glasses driver 230, a first shutter glasses device 250, and a second shutter glasses device 260.

The communication interface 210 receives a sync signal from a display apparatus.

For example, if the communication interface 210 is realized as a Bluetooth communication interface module, the communication interface 210 may receive a transmission stream which includes a sync signal by performing communication in accordance with Bluetooth communication standards. In this case, the transmission is synchronized with a display timing of each respective content, includes time information relating to respective operations for opening and closing each of a first shutter glasses device 250 and a second shutter glasses device 260 of the glasses apparatus 200, and may cause the shutter glasses to be opened and closed in accordance with a display timing corresponding to the glasses apparatus.

In another exemplary embodiment, the communication interface 210 may be realized as an IR receiving module and receive a sync signal in the form of IR having a specific frequency. In this case, the communication interface 210 includes time information relating to respective operations for opening and closing each of the first shutter glasses device 250 and the second shutter glasses device 260 of the glasses apparatus 200 to synchronize with a display timing of one particular content from among a plurality of contents.

Further, the communication interface 210 may receive information regarding an image frame rate and an image frame frequency with respect to each content.

The controller 220 controls overall operations of the glasses apparatus 200. In particular, the controller 220 transmits a sync signal received from the communication interface 210 to the shutter glasses driver 230 and controls the operations of the shutter glasses driver 230. More particularly, the controller 220 controls the shutter glasses driver 230 to generate a driving signal for driving the first shutter glasses device 250 and the second shutter glasses device 260 based on the sync signal.

The shutter glasses driver 230 generates a driving signal based on a sync signal received from the controller 220. In particular, the shutter glasses driver 230 may open the first shutter glasses device 250 and the second shutter glasses device 260 in accordance with a display timing of one content from among a plurality of contents displayed on the display apparatus 100.

The first shutter glasses device 250 and the second shutter glasses device 260 open and/or close shutter glasses in accordance with the driving signal received from the shutter glasses driver 230. Specifically, each of the first shutter glasses device 250 and the second shutter glasses device 260 opens shutter glasses simultaneously when a first content from among a plurality of contents is displayed, and closes shutter glasses when a second content is displayed. Accordingly, a user wearing the glasses apparatus 200 may watch the first content.

In an exemplary embodiment, in the case of 3D content, the first shutter glasses device 250 and the second shutter glasses device 260 may open and close each glasses alternately. In particular, the first shutter glasses device 250 may be opened at a time when a left eye image constituting one 3D content is displayed, and the second shutter glasses device 260 may be opened at a time when a right eye image is displayed.

### Synchronization with Unpaired Content

Hereinafter, a glasses apparatus which is capable of synchronizing with a content view which is not currently paired according to various exemplary embodiments, a display apparatus, and a content providing method using the same will be described with reference to FIG. 5.

As described above, the control unit 160 controls overall operations of the display apparatus 100. In particular, the control unit 160 may control to transmit a sync signal as a communication module performs a connection operation with a glasses apparatus according to a user command received from the glasses apparatus.

Specifically, the controller 160 may control to transmit a sync signal when each Bluetooth communication module performs a respective pairing with a Bluetooth communication interface module formed in the glasses apparatus.

In particular, the controller 160 broadcasts an inquiry message via a Bluetooth communication module and searches for a glasses apparatus within a range where Bluetooth communication is possible. If a pairing request message is received from a glasses apparatus in response to the inquiry message, the controller 160 may perform a pairing with the glasses apparatus by obtaining a Bluetooth device address from the glasses apparatus and transmitting a pin code to the glasses apparatus. Herein, the controller 160 may automatically perform the pairing when a pin code is received. However, the pairing method is not limited thereto, and the pairing process may be performed via direct user input of a pin code in order to pair a display apparatus with a glasses apparatus directly.

In this case, the control unit 160 may control Bluetooth communication modules in the interface unit 150 to perform the above-mentioned pairing with different glasses apparatuses. Herein, Bluetooth communication modules transmit different sync signals to a plurality of glasses apparatuses with which pairing has been completed and thus, the display apparatus 100 may synchronize each of a plurality of contents with different glasses apparatuses. However, this is only an example, and the display apparatus 100 may include a plurality of Bluetooth communication modules, and the control unit 160 may control each of the plurality of Bluetooth communication modules to perform a pairing operation with a plurality of glasses apparatuses.

Meanwhile, if a user command is received while a communication module is connected to a glasses apparatus, the control unit 160 may control the communication module to perform a connection operation with the glasses apparatus so as to transmit different sync signals.

Specifically, if a pairing request message is received from a glasses apparatus which is paired with a Bluetooth communication module, the control unit 160 may release connection with the Bluetooth communication module with which pairing with the glasses apparatus has been completed. The glasses apparatus may receive a sync signal different from the sync signal received from the previous Bluetooth communication module from the new Bluetooth communication module. Accordingly, a user wearing the glasses apparatus may watch other contents.

In particular, in the above exemplary embodiment, the display apparatus 100 generates each respective sync signal to correspond with a display timing of respective contents and transmits the respective sync signal to the glasses apparatus 200, but this is only an example.

More particularly, the controller 160 may control the interface 150 to generate a respective sync signal which corresponds a display timing of each respective content as a single transmission packet in accordance with Bluetooth communication standards. In this aspect, the interface 150 may generate a single transmission packet which includes time information relating to a first operation of opening and closing shutter glasses of a glasses apparatus by being synchronized with a display timing of the first content, time information relating to a second operation of opening and closing shutter glasses of a glasses apparatus by being synchronized with a display timing of the second contents, ..., and time information relating to an nth operation of opening and closing shutter glasses of a glasses apparatus by being synchronized with a display timing of the nth contents.

In this case, the interface 150 may generate a transmission packet by synchronizing a display timing of each respective content with information regarding the glasses apparatus. For example, the interface 150 may synchronize each content with information regarding different glasses apparatuses based on an arrangement order of image frames of the respective contents. In particular, if two contents are provided in a multi view mode, the image frames of the first, the third, ..., nth contents may be synchronized with information regarding glasses apparatus 1, and the image frames of the second, the fourth, ..., n+1th contents may be synchronized with information regarding glasses apparatus 2 (herein, n is an odd number). In addition, the interface 150 may transmit a transmission packet which is generated to include a sync signal regarding each of a plurality of contents to a glasses apparatus. The glasses apparatus may perform an operation of opening and closing shutter glasses by using a sync signal which includes its own glasses apparatus information from among sync signals regarding each of a plurality of contents.

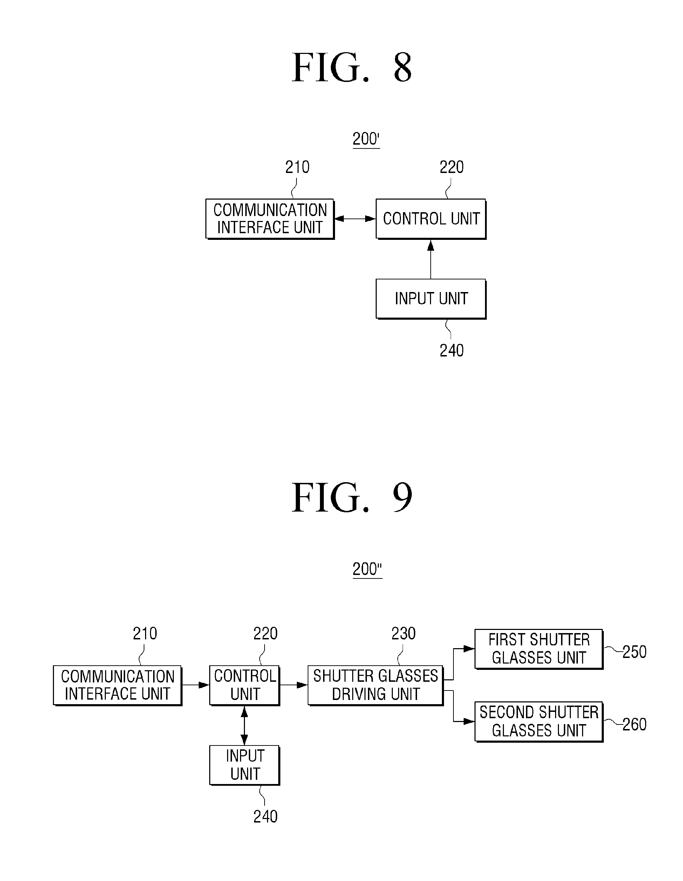

FIG. 8 is a block diagram which illustrates a configuration of a glasses apparatus according to various exemplary embodiments. According to FIG. 8, the glasses apparatus 200 comprises the communication interface 210, an input device 240, and the controller 220. The glasses apparatus 200 may be interlocked with a display apparatus which displays a plurality of contents alternately or sequentially.

The communication interface 210 facilitates communication with a display apparatus. Specifically, the communication interface 210 enables communication with a display apparatus by using various wireless methods, and receives a sync signal from the display apparatus.

For example, the communication interface 210 performs communication with a Bluetooth communication module which resides in a display apparatus by using a Bluetooth communication interface module, and may receive a sync signal in the form of a transmission packet in accordance with Bluetooth communication standards. Herein, the transmission packet may include time information which is usable to synchronize contents based on a display timing. As information included in the transmission packet has already been described above, further description will not be provided.

The input device 240 receives a user command for performing a connection operation with at least one of a plurality of communication modules in a display apparatus. In an exemplary embodiment, the input device 240 may comprise at least one switching button which is realized as a touch sensor or a manipulation button.

The control unit 220 controls overall operations of the glasses apparatus 200. In particular, if a user command is input, the control unit 220 may control the communication interface unit 210 to perform a connection operation with a communication module in a display apparatus to receive a sync signal corresponding to one of a plurality of contents.

For example, the control unit 220 may perform pairing by transmitting a pairing request message through a Bluetooth communication module in the communication interface unit 210 and transmitting/receiving a Bluetooth address and a pin code to/from one of a Bluetooth communication module in a display apparatus. Once the pairing operation is completed, the control unit 220 may receive a transmission packet according to Bluetooth communication standard including time information to synchronize contents with a display timing through the communication interface unit 210.

In this case, the control unit 220 may perform pairing with a Bluetooth communication module in a display apparatus through different channels in accordance with the number that a user touches a switching button in the input unit 240. For example, if a user touches a switching button once, the control unit 220 may control the communication interface unit 210 to perform pairing with a first channel of a Bluetooth communication module in a display apparatus, and if a user touches a switching button twice, the control unit 220 may control the communication interface unit 210 to perform pairing with a second channel of a Bluetooth communication module in a display apparatus

Meanwhile, the input unit 240 may have a plurality of switching buttons to receive a user command to perform a connection operation with a communication module in a display apparatus. In this case, the control unit 220 may control a Bluetooth communication module in the communication interface unit 210 to perform pairing with each channel of a Bluetooth communication module in a display apparatus whenever each of a plurality of switching buttons is touched in order to receive a sync signal corresponding to different contents.

If a user inputs a selection command to select one of a plurality of content views to the input unit 240, the interface unit 210 may transmit information regarding the selected content view to the display apparatus 100 and receive a sync signal corresponding to the selected content view from the display apparatus 100.

Meanwhile, if a user command is received while a communication module is connected and a sync signal corresponding to one of the plurality of contents is received, the control unit 220 may control the communication interface unit 210 to receive a sync signal corresponding to another content from among a plurality of contents by performing a connection operation with another channel of the communication module.

Specifically, if a user command is input when pairing with a Bluetooth communication module in a display apparatus is completed, the control unit 220 transmits a pairing request message to the display apparatus. Accordingly, the control unit 220 may control to transmit/receive a Bluetooth address and a pin code through another channel from among channels of a Bluetooth communication module to/from the display apparatus so that a Bluetooth communication module in the communication interface unit 210 may perform pairing with another channel of another Bluetooth communication module of the display apparatus. Accordingly, a sync signal corresponding to another content from among a plurality of contents can be received from a channel of another Bluetooth communication module of the display apparatus and thus, a user wearing a glasses apparatus may watch different contents.

FIG. 9 is a block diagram which illustrates a detailed configuration of a glasses apparatus according to various exemplary embodiments. According to FIG. 9, the glasses apparatus 200 comprises the communication interface 210, the input device 240, the controller 220, the shutter glasses driver 230, the first shutter glasses device 250, and the second shutter glasses device 260. Because those components with the same reference numerals as those in FIG. 8 perform the same functions, overlapping description will not be provided. In addition, the above-mentioned description regarding the glasses apparatus 200 may also be applied to components in FIG. 9 except for those described below. For better understanding, overlapping explanation will be provided, if necessary.

As described above, the controller 220 controls operations of the shutter glasses driver 230 by transmitting a sync signal received from the communication interface 210 to the shutter glasses driver 230.

The shutter glasses driver 230 generates a driving signal based on a sync signal received from the controller 220 as described above. Specifically, the shutter glasses driver 230 opens the first shutter glasses device 250 and the second shutter glasses device 260 in accordance with a display timing of one content from among a plurality of contents based on a sync signal received from a display apparatus.

Meanwhile, if connection of the communication interface unit 210 with one channel of a communication module in a display apparatus is released and the communication interface unit 210 is connected to another channel, the control unit controls the shutter glasses driving unit 230 to generate a driving signal based on a sync signal received from another channel which is connected to communicate with the communication interface unit 210. Accordingly, the shutter glasses driving unit 230 may open the first shutter glasses unit 250 and the second shutter glasses unit 260 according to a display timing of another content from among a plurality of contents displayed on the display apparatus based on the newly-received sync signal.

Each of the first shutter glasses device 250 and the second shutter glass device 260 opens and/or closes shutter glasses based on a sync signal received from the shutter glasses driver 230. Specifically, each of the first shutter glasses device 250 and the second shutter glasses device 260 opens shutter glasses simultaneously when a first one of a plurality of contents is displayed, and close shutter glasses altogether when a second content is displayed. Accordingly, a user wearing the glasses apparatus 200 may watch one content.

In particular, in the above exemplary embodiment, a display apparatus generates a sync signal which corresponds with a display timing of contents and transmits the sync signal to the glasses apparatus 200, but this is only an example. More particularly, the display apparatus may generate a respective sync signal corresponding to a display timing of each respective content as one transmission packet in accordance with Bluetooth communication standards and transmit the respective sync signal to the glasses apparatus.

When a sync signal is received, the controller 220 may check a display timing corresponding to its glasses apparatus information and open or close shutter glasses based on the display timing. In addition, when a user command is received, the controller 220 may control to perform an operation of opening and closing shutter glasses based on a display timing of contents which are not synchronized with its glasses apparatus information so that the user may provide other contents.

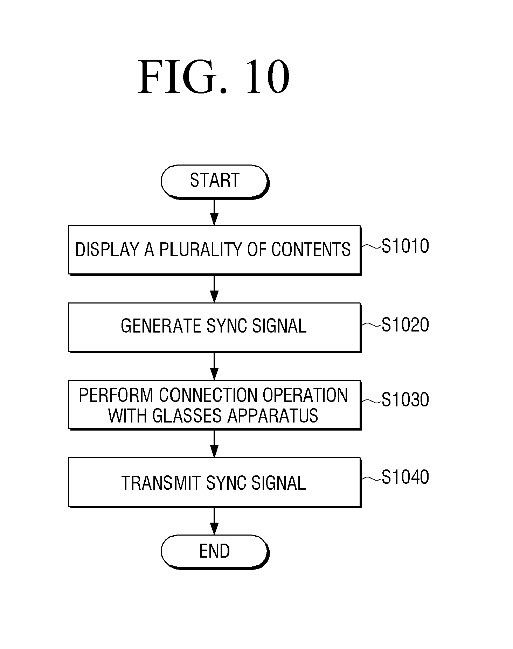

FIG. 10 is a flowchart which illustrates a content providing method which is executable by using a display apparatus according to an exemplary embodiment.

In a first operation S1010, a plurality of different contents are displayed. Specifically, different contents are displayed by being disposed alternately or sequentially.

Subsequently, in operation S1020, a sync signal is generated. Specifically, a sync signal which synchronizes a glasses apparatus in correspondence with each respective content based on a display timing of each respective content is generated.

Afterwards, a connection operation with a glasses apparatus is performed (S1030). Specifically, a connection operation between one channel of a communication module and a glasses apparatus is performed according to a user command received from the glasses apparatus. In this case, the communication module is a Bluetooth communication module, and the Bluetooth communication module may perform pairing with a Bluetooth communication module in the glasses apparatus according to a user command.

Subsequently, in operation S1040, the sync signal is transmitted. Specifically, the sync signal may be transmitted by using the communication module which has performed the connection operation.

Meanwhile, in step S1030, if a user command is received when a communication module is connected to a glasses apparatus, anther communication module may perform a connection operation with the glasses apparatus so that a different sync signal is transmitted.

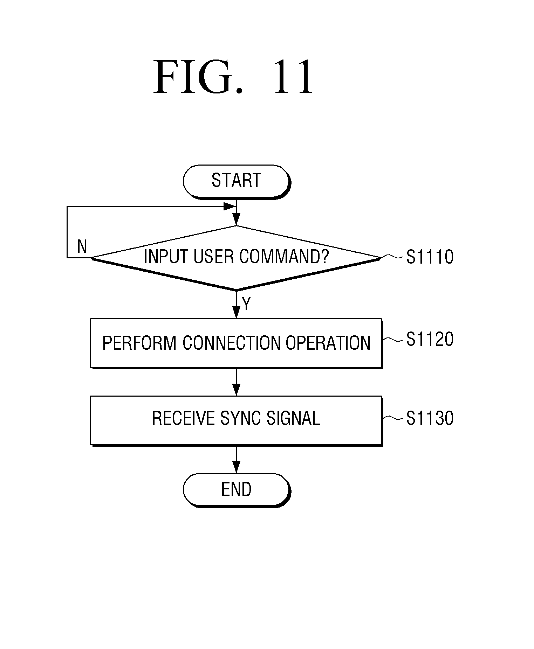

FIG. 11 is a flowchart to explain a content providing method in a glasses apparatus according to an exemplary embodiment. In particular, FIG. 11 is a view to explain a content providing method of a glasses apparatus which is interlocked with a display apparatus which display s a plurality of contents alternately.

First of all, a user command is input (S1110). Specifically, a user command to perform a connection operation with a communication module in a display apparatus is input.

Subsequently, if a user command is input (S1110-Y), a connection operation is performed (S1120). That is, a connection operation through one channel of a communication module is performed.

Afterwards, a sync signal is received (S1130). Specifically, if a connection operation is performed, a sync signal corresponding to one of a plurality of contents may be received.

Meanwhile, each communication module in a display apparatus is a Bluetooth communication module, a glasses apparatus may perform communication with a communication module in a display apparatus using a Bluetooth communication module. In this case, in step S1120, if a user command is input, a Bluetooth communication module may be controlled to perform pairing with one channel of a Bluetooth communication module to receive a sync signal corresponding to one of a plurality of contents.

In addition, a glasses apparatus may have a plurality of switching buttons which receive a user command to perform a connection operation with a communication module. In this case, in step S1120, a Bluetooth communication module is controlled to perform a pairing operation with a Bluetooth communication module in a display apparatus whenever a plurality of switching buttons are touched.

Meanwhile, in step S1120, if a user command is input while one channel of a communication module is connected, a connection operation through another channel of a communication module is performed to receive a sync signal corresponding to another one of a plurality of contents.

In particular, the content providing method according to an exemplary embodiment may effectuate an operation of opening and closing the first and the second shutter glasses devices in accordance with a display timing of one of a plurality of contents based on a sync signal received from a display apparatus.

Because exemplary embodiments regarding each of FIG. 10 and FIG. 11 have been described above, overlapping description will not be provided.

In an exemplary embodiment, a program to perform a method according to various exemplary embodiments may be stored in various types of recording media and used. Specifically, a code to perform the above-described methods may be stored in various types of recording media which is readable by a terminal, such as Random Access Memory (RAM), a flash memory, Read Only Memory (ROM), Erasable Programmable ROM (EPROM), Electronically Erasable and Programmable ROM (EEPROM), register, hard disk, removable disk, memory card, USB memory, and CD-ROM.

### Mode Conversion Based on Operational Status of Glasses Apparatus

Hereinafter, a display apparatus which performs a mode conversion based on an operational status of each of a plurality of glasses apparatuses according to various exemplary embodiments and a method for converting a mode of the display apparatus will be described.

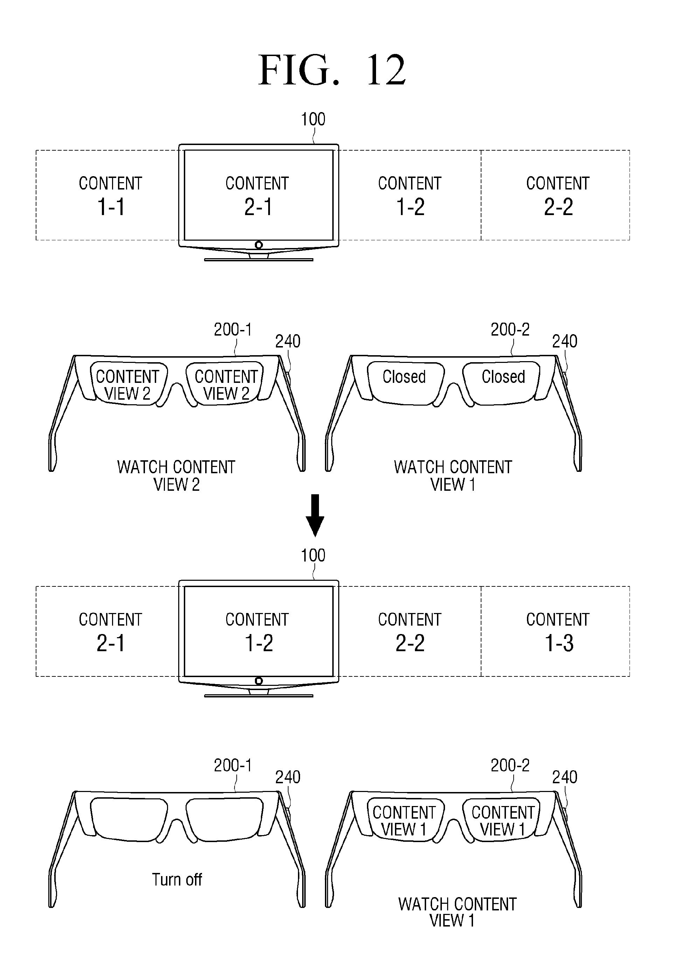

FIG. 12 is a concept view which illustrates an output of the display apparatus 100 when one content view of the display apparatus 100 is turned off.

However, the glasses apparatus 200 which is connected to one content view may be turned off while a plurality of content views are being outputted. For example, as illustrated in FIG. 12, one of the two glasses apparatuses 200-1, 200-2 which are synchronized with two different contents may be turned off. In this case, if the other glasses apparatus 200-1 which is synchronized with content view 2 has been turned off, only content view 1 is synchronized with the glasses apparatus 200-2 and thus, the display apparatus 100 does not need to output a plurality of content views. In particular, if a pair of content views are outputted alternately, the number of image frames of each content view is reduced by half and thus, display resolution is deteriorated, thus providing relatively unclear images. In addition, because image data regarding different content views must be received and processed respectively, power loss is also significant. Therefore, if the number of content views which are synchronized with a respective glasses apparatus 200 is reduced while more than one glasses apparatus 200 has been turned off while a plurality of content views are being outputted, the number of content views should be reduced or the mode should be converted to a single view mode. However, it is difficult for a user who is watching one content view to know the viewing status of other potential users when different content views are being outputted and thus, the display apparatus 100 should be configured to determine if the number of content views has been reduced and accordingly, whether to reduce the number of output content views or convert the mode to a single view mode.

Hereinafter, the display apparatus 100 according to an exemplary embodiment to resolve the above problems, and a specific configuration and operation of the glasses apparatus 200 will be described.

The display apparatus 100 according to various exemplary embodiments comprises a plurality of receivers 110-1, 110-2, ..., 110-n, a plurality of signal processors 120-1, 120-2, ..., 120-n, the display 130, the sync signal generator 140, the interface 150, and the controller 160 as illustrated in FIG. 5.

The above components follow the above-described exemplary embodiment. However, overlapping description will not be provided in general, unless it is necessary for better understanding.

The sync signal generator 140 generates a sync signal to synchronize each respective content with a corresponding glasses apparatus 200 based on a display timing of each respective content. In particular, if is the display apparatus 100 is configured to perform a mode conversion based on a change in the number of content views, a sync signal is generated in accordance with the number of new content views.

The interface 150 facilitates communication with the glasses apparatus 200. In this case, the interface 150 communicates with the glasses apparatus by using any of various wireless methods to transmit a sync signal to the glasses apparatus 200 or to perform a pairing with the glasses apparatus 200.

For example, the interface 150 may include a Bluetooth communication module and performs a connection with the glasses apparatus 200, and may generate a transmission stream in accordance with Bluetooth communication standards and transmit the transmission stream to the glasses apparatus 200.

If is the display apparatus 100 is configured to perform a mode conversion based on a change in the number of content views, the offset times for an operation of opening and closing of shutter glasses of the glasses apparatus 200 are newly set in accordance with a sync signal which is based on the changed content views, and such information is included in a transmission stream.

Hereinafter, the controller 160 will be described. As described above, the controller 160 controls overall operations of the display apparatus 100. In particular, the controller 160 may perform a mode conversion based on a respective operational status of each of a plurality of glasses apparatuses 200. For example, more than one glasses apparatus 200 from among a plurality of glasses apparatuses 200-1, 200-2, ... 200-n may be turned off, and accordingly, there may be only one content view which is synchronized with a glasses apparatus 200 which is still turned on. In this case, a user is watching a content via only the one content view, as though the display apparatus 100 is operating in a single view mode, but the display apparatus 100 still outputs a plurality of content views alternately or sequentially. Therefore, as described above, significant power loss may occur, and deteriorating display resolution in comparison with a single view mode may also occur, and thus, a user may watch a screen which provides a relatively poor image quality. In this case, the controller 160 recognizes that more than one glasses apparatus 200 is turned off and thus, converts a mode of the display apparatus 100 to be in a single view mode.

In another exemplary embodiment, more than one glasses apparatus 200 from among a plurality of glasses apparatuses 200 may be turned off and thus, the number of content views which are synchronized with the glasses apparatuses 200 which are still turned on may be reduced. In this case, the number of content views output through the display apparatus 100 is also greater than the number of content views for actual viewing, causing problems of power loss and deteriorated resolution as described above. Therefore, if more than one glasses apparatus 200 is turned off and thus, the number of content views is reduced, the control unit converts the mode of the display apparatus 100 to a multi view mode which corresponds to the number of the remaining active content views.

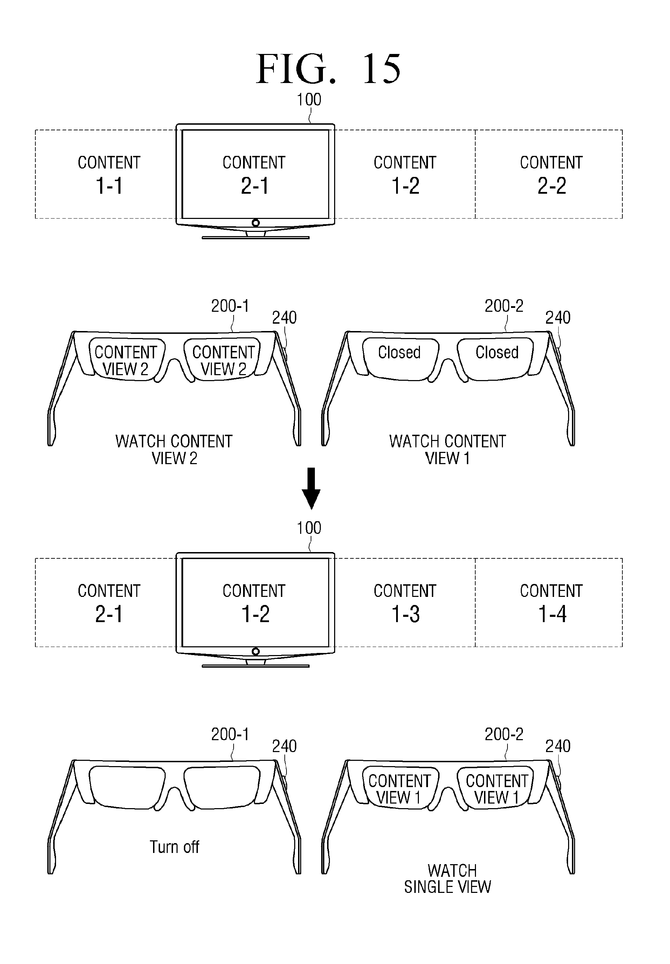

In another exemplary embodiment, as the number of content views which are synchronized with more than one glasses apparatus 200 changes, the overall number of content views which are synchronized with the glasses apparatuses 200 may be changed. For example, suppose that one glasses apparatus 200 is synchronized with a content view of a broadcast of a sports program. In this case, if a user changes the content view to a content view of a broadcast of a drama and there is no other glasses apparatus 200 which is synchronized with the content view of the broadcast of the sports program, the number of content views which are synchronized with the glasses apparatus 200 is reduced. In this case, the controller 160 converts the mode of the display apparatus 200 to a multi view mode which corresponds to the number of the remaining content views. In a case where the number of content views which are synchronized with the glasses is reduced to one, the controller 160 converts the mode of the display apparatus 100 to a single view mode. FIG. 15 illustrates a case where the mode of the display apparatus 100 is converted to a single view mode if one glasses apparatus 200-1 is turned off when there are two content views.

In order to perform a mode conversion by changing a mode, the display apparatus 100 should receive information regarding an operational status of the glasses apparatus 200 from the glasses apparatus. If a turn-off command is received via the input device 240 of the glasses apparatus 200, the glasses apparatus 200 may inform the display apparatus 100 that the power of the glasses apparatus 200 is being turned off via the communication interface 210. Subsequently, the display apparatus 100 receives the turn-off information from the glasses apparatus 200 via the interface 150, and terminates a synchronization between the glasses apparatus 200 and a content view.

In a case where the content view which is being synchronized with the glasses apparatus 200 is changed, the similar operation may be performed. In particular, a command to change a content view may be received via the input device 240 of the glasses apparatus 200, and the glasses apparatus 200 then informs the display apparatus 100 that the content view of the corresponding glasses apparatus 200 is being changed via the communication interface 210. The interface 150 of the display apparatus 100 receives the command relating to the change of a content view from the glasses apparatus 200.

Hereinafter, a mode converting method will be described.

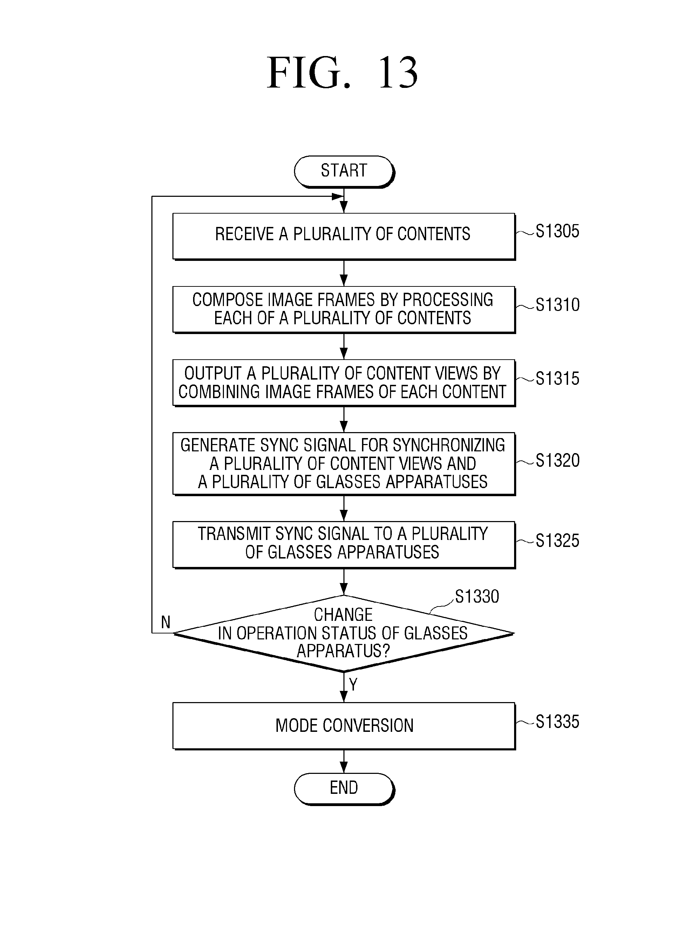

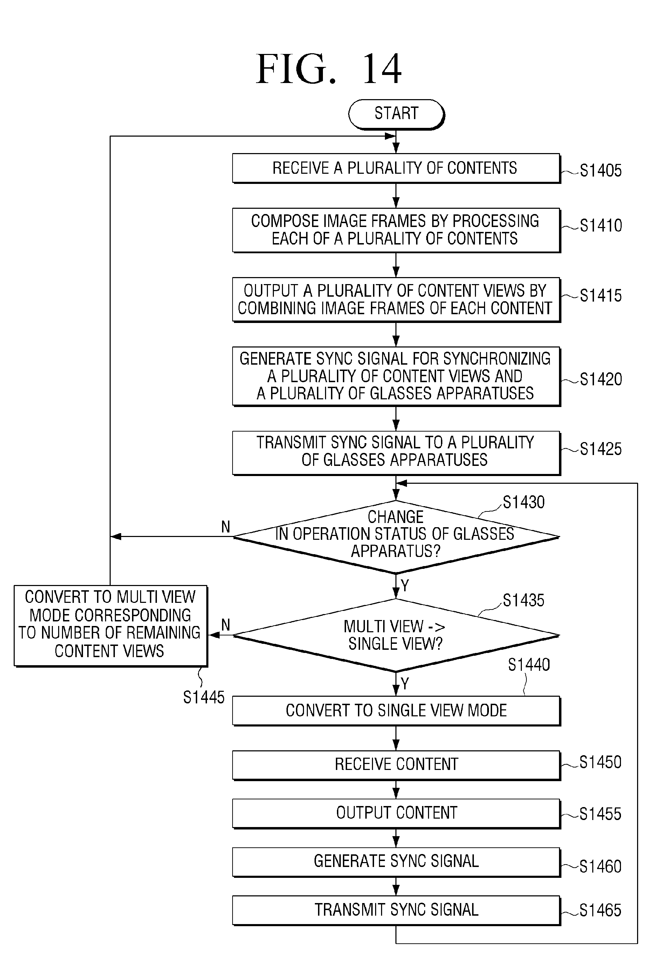

FIGS. 13 and 14 are flowcharts which illustrate a method for converting a mode in a display apparatus according to various exemplary embodiments.

In each of respective operations S1305 and S1405, a plurality of contents is received, and then, in respective operations S1310 and S1410, a respective image frame is composed by processing each of the plurality of contents. In respective operations S1315 and S1415, a plurality of content views is outputted by combining respective subsets of the composed image frames, and then, in respective operations S1320 and S1420, a sync signal for synchronizing a plurality of content views and a plurality of glasses apparatuses is generated. In operations S1325 and S1425, the sync signal is transmitted to at least one of a plurality of glasses apparatuses.

In respective operations S1330 and S1430, a determination is made as to whether an operational status of at least one of the plurality of the glasses apparatuses is changed while a plurality of content views is being outputted. In the method illustrated in FIG. 13, if a positive determination is made (S1330-Y), then in operation S1335, a mode conversion is performed based on the changed operational status of the at least one of the plurality of glasses apparatuses.

In the method illustrated in FIG. 14, if a positive determination is made in operation S1430 (i.e., 1430-Y), then in operation S1435, a determination is made as to whether a multi view mode should be converted to a single view mode, and if this determination is also positive (i.e., S1435-Y), then in operation S1440, the mode of the display apparatus 100 is converted to a single view mode. Accordingly, in operation S1450, contents are received and signal-processed, and in operation S1455, the processed contents are outputted in accordance with a single view mode. Then, in operation S1460, a new sync signal which is based on the single view mode is generated, and in operation S1465, the newly generated sync signal is transmitted to the glasses apparatus.

If a result of the determination of operation S1435 is that a multi view mode should not be converted to a single view mode (i.e., S1435-N), then in operation S1445, a first multi view mode is changed to a second multi view mode for which the number of content views is reduced, and the mode of the display apparatus 100 is changed to the second multi view mode which corresponds to the number of the remaining content views.

Further, if a glasses apparatus is turned on again when is the mode of the display apparatus has been converted to a single view mode, an operation for converting the mode of the display apparatus back to a multi view mode may be further included.

FIG. 15 is a concept view which illustrates an output of the display apparatus 100 when a mode has been converted in the display apparatus.

A glasses apparatus 200 which is connected to one content view may be turned off while a plurality of content views are being outputted. For example, as illustrated in FIG. 15, one of the two glasses apparatuses 200-1, 200-2 which are synchronized with two different contents may be turned off. In this case, if the other glasses apparatus 200-1 which is synchronized with content view 2 has been turned off, only content view 1 is synchronized with the glasses apparatus 200-2 and thus, the display apparatus 100 does not need to output a plurality of content views. In particular, if a pair of content views are outputted alternately, the number of image frames of each content view is reduced by half and thus, display resolution is deteriorated, thus providing relatively unclear images. In addition, because image data regarding different content views must be received and processed respectively, power loss is also significant. Therefore, if the number of content views which are synchronized with a respective glasses apparatus 200 is reduced while more than one glasses apparatus 200 has been turned off while a plurality of content views are being outputted, the number of content views should be reduced or the mode should be converted to a single view mode. However, it is difficult for a user who is watching one content view to know the viewing status of other potential users when different content views are being outputted and thus, the display apparatus 100 should be configured to determine if the number of content views has been reduced and accordingly, whether to reduce the number of output content views or convert the mode to a single view mode.

Hereinafter, the glasses apparatus 200 according to various exemplary embodiments will be described.

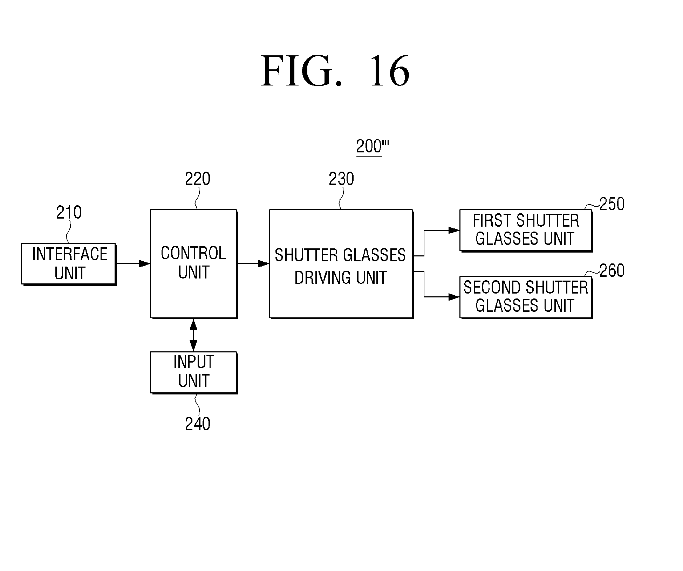

FIG. 16 is a block diagram which illustrates a configuration of the glasses apparatus 200 according to various exemplary embodiments. In particular, the glasses apparatus 200 in FIG. 16 interlocks with the display apparatus 100 which outputs a plurality of contents alternately or sequentially by image frame unit, and comprises an input device 240, a controller 220, a shutter glasses driver 230, a communication interface 210, a first shutter glasses device 250, and a second shutter glasses device 260.

The input device 240 receives a turn-on command, a turn-off command, or a content view change command. The input device 240 of the glasses apparatus 200, which is synchronized with one of a plurality of content views, receives a turn-on command, a turn-off command, or a content view change command, and the communication interface 210 transmits the received command to the display apparatus 100. In the case of the turn-on command, the mode of the display apparatus 100 may be changed based on the turn-on operational status of the glasses apparatus 200 and the selection of a content view. If a turn-off command is received, the power of the glasses apparatus 200 is turned off, and the display apparatus 100 converts a mode if there is a change in the number of content views which are synchronized with a glasses apparatus. If a content view change command is received, the content view of the glasses apparatus 200 is changed, and the display apparatus 100 converts a mode if there is a change in the number of content views which are synchronized with a glasses apparatus. The turn-on command, the turn-off command, or the content view change command may be received not only via the input device 240, but also via other separate apparatuses, such as, for example, a remote controller.

The communication interface 210 facilitates communication with the display apparatus 100. The communication interface 210 may be realized as a Bluetooth communication interface module and may receive a sync signal by communicating with the display apparatus 100 and transmit a turn-on command, a turn-off command, or a content view change command which is received via the input device to the display apparatus 100 as described above.

As described above, a sync signal may be received in the form of a transmission stream in accordance with Bluetooth communication standards and may include time information relating to an operation of opening and closing the first shutter glasses device 250 and the second shutter glasses device 260 of the glasses apparatus 200 by being synchronized with a display timing for a particular plurality of contents. As the information included in the transmission stream has already been described above, further description will not be provided.

The controller 220 controls overall operations of the glasses apparatus 200. In particular, the controller 220 transmits a sync signal received from the communication interface 210 to the shutter glasses driver 230 to control the operations of the shutter glasses driver 230. In particular, the controller 220 controls the shutter glasses driver 230 to generate a driving signal to derive the first shutter glasses device 250 and the second shutter glasses device 260 based on a sync signal. In addition, the controller 220 may control the communication interface 210 to transmit a turn-on command, a turn-off command, or a content view change command which is received via the input device 240 to the display apparatus 100. In particular, if a mode conversion is performed with respect to the display apparatus 100, the controller 220 controls an operation of opening and closing shutter glasses of the glasses apparatus 200 in accordance with a changed offset time for opening and closing the shutter glasses of the glasses apparatus 200 based on mode conversion information included in a transmission stream received from the display apparatus 100.

The shutter glasses driver 230 generates a driving signal based on a sync signal received from the controller 220. In particular, the shutter glasses driver 230 may open the first shutter glasses device 250 and the second shutter glasses device 260 in accordance with a display timing of one content from among a plurality of contents displayed on the display apparatus 100 based on the received sync signal.

The first shutter glasses device 250 and the second shutter glasses device 260 open or close shutter glasses in accordance with a driving signal received from the shutter glasses driver 230. Specifically, each of the first shutter glasses device 250 and the second shutter glasses device 260 opens shutter glasses simultaneously when a first one of a plurality of contents is displayed, and closes shutter glasses altogether when a second content is displayed. Accordingly, a user wearing the glasses apparatus 200 may watch one content.

Meanwhile, in the above-described exemplary embodiment, the display apparatus 100 generates a respective sync signal in correspondence with a display timing of respective contents, and transmits the respective sync signal to the glasses apparatus 200, but this is only an example.

Once a sync signal is received, the glasses apparatus 200 may check a display timing with respect to information regarding the glasses apparatus 200, and effect an operation of opening and closing shutter glasses in accordance with the display timing. In particular, the glasses apparatus 200 may control the shutter glasses driver 230 to generate a driving signal sequentially based on a respective sync signal corresponding to each respective content included in a transmission stream. Accordingly, the first shutter glasses device 250 and the second shutter glasses device 260 are opened whenever image frames of each respective content are displayed.

Meanwhile, a program to perform a method according to various exemplary embodiments may be stored in various types of recording media and used. Specifically, a code to perform the above-described methods may be stored in various types of recording media which is readable by a terminal, such as Random Access Memory (RAM), a flash memory, Read Only Memory (ROM), Erasable Programmable ROM (EPROM), Electronically Erasable and Programmable ROM (EEPROM), register, hard disk, removable disk, memory card, USB memory, and CD-ROM.

### Display Apparatus Based on Polarized Light Method and Glasses Apparatus

The above-mentioned various exemplary embodiments may be performed through a display apparatus based on a polarized light method and a glasses apparatus. Hereinafter, the configuration and operation of a display apparatus based on a polarized light method and a glasses apparatus will be explained.

### Configuration and Operation of Display Apparatus

Hereinafter, first of all, the configuration and operation of a display apparatus based on a polarized method will be explained.

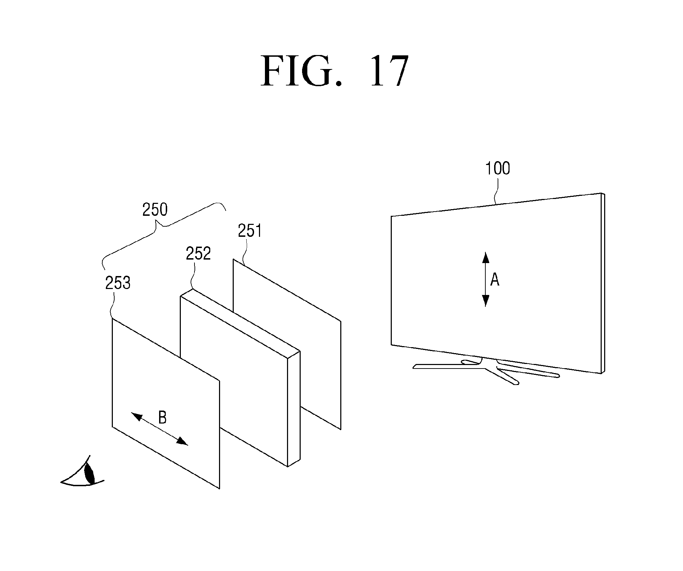

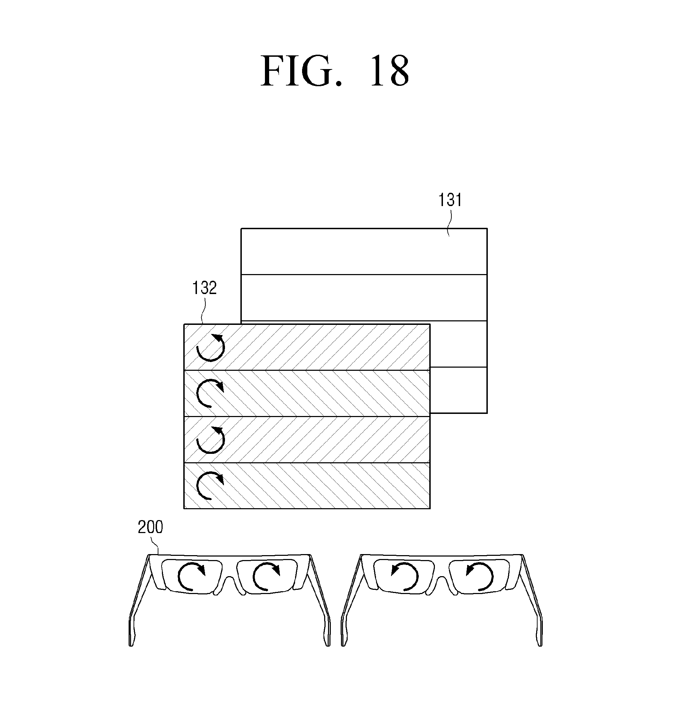

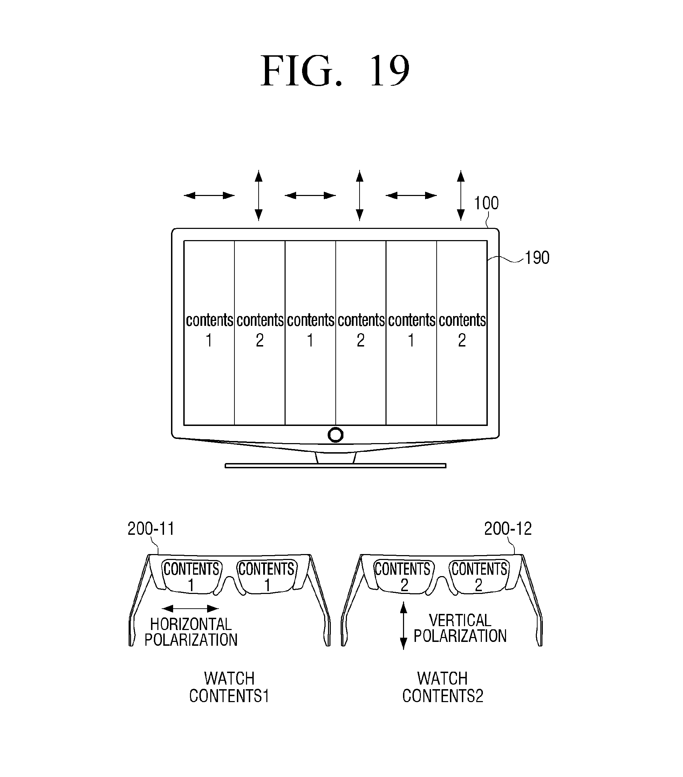

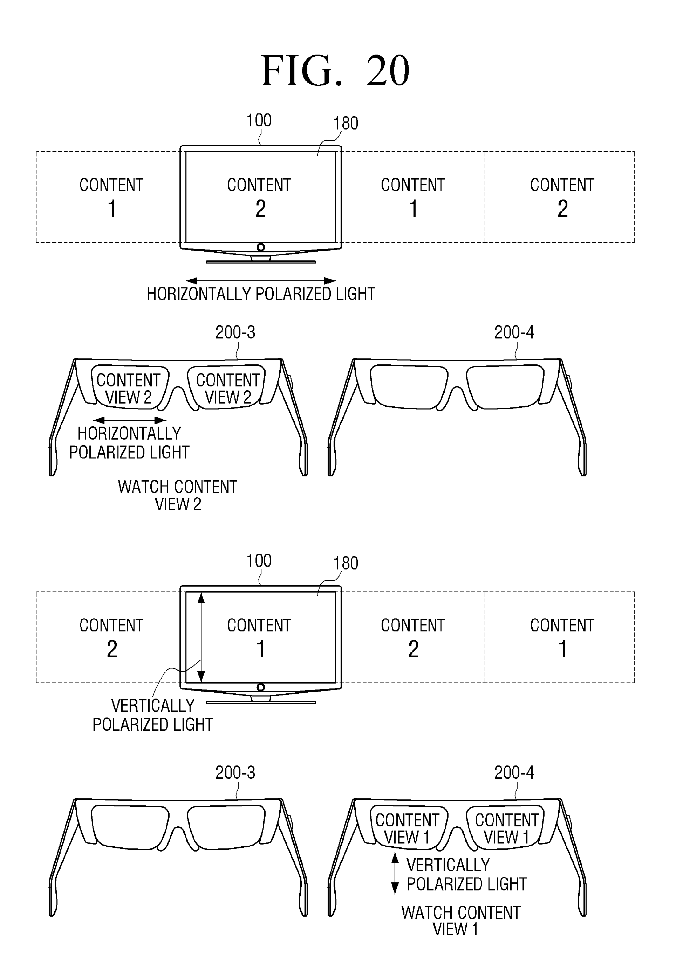

FIG. 17 is a view which illustrates an exemplary embodiment of a system through which a polarized image can be viewed, FIG. 18 is a view which is provided to explain a pattern retarder method, FIG. 19 is a view which illustrates another exemplary embodiment of a pattern retarder method, and FIG. 20 is a view which illustrates an exemplary embodiment of a multi-view method by displaying image frames alternately.

As illustrated in FIG. 17, a system through which a polarized image can be viewed comprises the display apparatus 100 and a glasses apparatus.

The display apparatus 100 is a component which outputs an image and particularly, outputs an image which is polarized in a specific direction, such as in a horizontal direction or in a vertical direction. As illustrated in FIG. 17, if a display apparatus outputs an image which is polarized in a vertical direction A, a glasses apparatus 40 may transmit only an image which is polarized in a horizontal direction B and block an image which is polarized in the vertical direction A. In this case, a viewer wearing a glasses may not watch an image which is polarized in the vertical direction. As such, the display apparatus 100 includes various polarizing means as it should polarize output images.

As an example of a polarizing means, the display apparatus 100 may further include a polarizing panel (not shown). The polarizing panel is provided on the surface of the screen of the display apparatus 100, and polarizes an image output from the display apparatus 100 in a predetermined direction. If necessary, polarization may be performed as one of linear polarization, left-circular polarization, and right-circular polarization.

However, in order to provide a multi-view displaying a plurality of contents or display 3D contents including a left-eye image and a right-eye image according to various exemplary embodiments, the display apparatus should output a polarized image in a plurality of directions. That is, a polarizing means having different polarizing axes is required.

As an example, a polarization may be set differently as a polarizing panel having different light axes for each area of an image is provided as illustrated in FIG. 18. Such a method is referred to as a pattern retarder method and the polarizing panel includes a pattern retarder.

The pattern retarder 132 is attached to a display panel 131 of the display apparatus. The pattern retarder 132 includes first patterns facing odd number lines in a pixel array of the display panel 131 and second patterns facing even number lines in a pixel array of the display panel 131. As mentioned above, in this case, the light axis of the first patterns and the light axis of the second patterns are different from each other. For example, each of the first patterns and the second patterns may delay the face of incident light by 1/4 and -1/4 wavelengths, respectively. In this case, linearly polarized light is converted into circularly polarized light in a different direction. That is, the first patterns of the pattern retarder 132 may convert the light of an image displayed on odd number line of a pixel array into left-circular polarized light, and the second patterns of the pattern retarder 132 may convert the light of an image displayed on even number line of a pixel array into a right-circular polarized light.

In this case, a polarizing filter of one glasses apparatus may have the same polarization axis as the first patterns of the pattern retarder 132. In addition, a polarizing filter of another glasses apparatus has the same polarization axis as the second patterns of the pattern retarder 132. That is, the former glasses apparatus may transmit the light of the left-circular polarized image while blocking the light of the right-circular polarized image, and the latter glasses apparatus may transmit the light of the right-circular polarized image while blocking the light of the left-circular polarized image. Accordingly, different viewers may watch images which are polarized in different ways. In the case of 3D image, the left-eye polarizing filter and the right-eye polarizing filter of one glasses apparatus have different polarization axes and may view a left-eye image and a right-eye image respectively.

Meanwhile, the pattern retarder 132 may be configured to be controlled electrically so as to change a polarization direction. In the above exemplary embodiment, if it is necessary to view a right-circular polarized image through the first glasses apparatus and a left-circular polarized image through the second glasses apparatus, the pattern of the odd number indication line and the pattern of the even number indication line of the display apparatus may be changed with each other.

To do so, for example, the pattern retarder 132 may be realized as a liquid cell. The orientation of the liquid cell (not shown) is switched in accordance with a driving voltage, and the characteristics of polarized light vary depending on the switched orientation. Herein, the characteristics of polarized light may be phase or direction of polarized light. That is, if polarized light enters and a specific driving voltage is applied to a liquid cell for orientation, the wavelength of the incident light may be delayed. For instance, the pattern retarder 132 consisting of a liquid cell may change the direction of a circular polarized light by changing the phase of the circular polarized light in an add number indication line or may reverse the direction of a circular polarized light by changing the phase of the circular polarized light in an even number indication line. Although the liquid cell is not technically limited, if it is realized as a twist TN cell and an applied voltage is '0', the incident light is rotated and a polarization direction may be changed by 90 degree by the twisting of liquid molecules. That is, if the incident light is linearly polarized, the polarization direction is rotated by 90 degrees, if the incident light is left-circularly polarized, it is changed to the right-circular polarized light, and the right-circular polarized light is changed to the left-circular polarized light.

In the above exemplary embodiment, the polarization axes of patterns vary depending on each horizontal pixel line. However, each pattern area of the pattern retarder may not necessarily be divided by a vertical line. That is, as illustrated in FIG. 18, the pattern retarder may include the third patterns facing odd number lines for each vertical line and the fourth patterns facing even number lines. Herein, the polarizing filter of one glasses apparatus 200-11 may have the same polarization axis (horizontal direction) as the first patterns of the pattern retarder. In addition, the polarizing filter of another glasses apparatus 200-12 has the same polarization axis (vertical direction) as the second patterns of the pattern retarder. Each glasses apparatus views content 1 and content 2 respectively.

Meanwhile, just like the pattern conversion of the above-described pattern retarder 132, the characteristics of polarized light in the entire polarizing panel may be changed. This feature is necessary especially because the characteristics of polarized light needs to be changed whenever the image frame is changed if the above-explained method for providing multi-view by displaying image frames alternately is provided in a display apparatus based on a polarized light method. That is, as illustrated in FIG. 20, the polarization direction is changed by changing the characteristics of polarized light of a polarizing panel when an image frame is displayed.

In FIG. 20, if a horizontally-polarized content view 2 is displayed, it can be viewed through the glasses apparatus 200-3, but not through the glasses apparatus 200-4. When content 1 is displayed, the display apparatus 100 outputs a displayed image by polarizing the image vertically, and a viewer wearing the glasses apparatus 200-4 may watch content view 1.

As such, if a plurality of contents are polarized differently for each frame before being output, the contents may be provided to a viewer without deterioration in resolution. However, the display apparatus 100 needs to raise a frame rate of the display apparatus 100 and have shutter glasses to change a polarization axis so that a glasses apparatus may correspond to the display apparatus 100, causing increase in manufacturing costs. In the case of the above-mentioned pattern retarder method, it is not necessary to change the frame rate, and a user may watch an image using a glasses apparatus without shutter glasses, but resolution may be deteriorated.

### Configuration of Glasses Apparatus

Hereinafter, a configuration and an operation of a glasses apparatus based on a polarized light method will be explained.

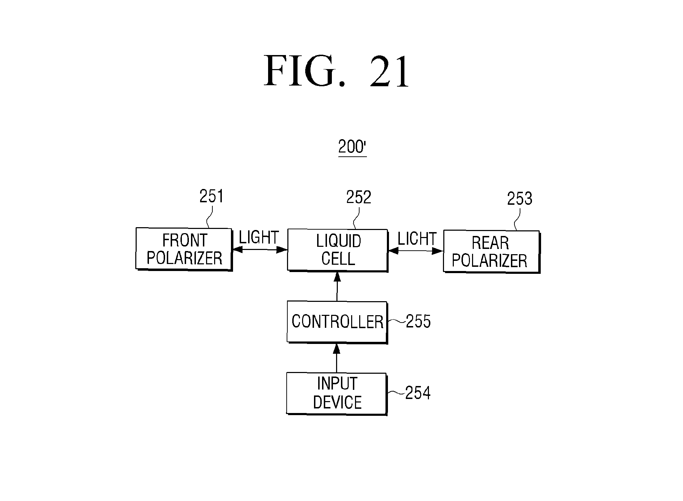

FIG. 21 is a block diagram which illustrates a configuration of a glasses apparatus based on a polarized light method according to various exemplary embodiments.

Referring to FIG. 21, the glasses apparatus based on a polarized light method according to various exemplary embodiments comprises a front polarizer 251, a liquid cell 252, a rear polarizer 253, an input unit 254, and a control unit 255.

As described above, a glasses apparatus transmits an image if the image has the same light axis as the image polarized in a display apparatus and blocks an image if the image crosses at right angles. Accordingly, a user wearing the glasses apparatus may watch an image selectively.

As an exemplary embodiment of a glasses apparatus based on a polarized light method, there is a glasses apparatus having a fixed polarization means. That is, a lens has a predetermined light axis, and only a polarized image to be consistent with the light axis is transmitted. Such a glasses apparatus may be used both in a display apparatus based on the above-mentioned pattern retarder method and in a display apparatus based on a multi-view method by displaying image frames alternately. Each glasses apparatus does not require a separate sync operation with the display apparatus and thus, the glasses apparatus is highly cost-effective and has less flicker effect.

However, if a user wishes to watch a polarized image corresponding to another light axis which is different from the predetermined light axis, the user needs to wear a glasses apparatus having a different light axis or replace a polarizing lens. The user may watch the polarized image simply by replacing a polarizing lens mounted in the glasses apparatus and inserting a new polarizing lens. However, depending on the polarization characteristics of an image, the user may have to replace a lens manually each time.

Accordingly, in another exemplary embodiment, a glasses apparatus may include a means to change the polarization characteristics of a lens. Hereinafter, a glasses apparatus having such a means will be explained.

In the above-described exemplary embodiment with regard to FIG. 17, a glasses apparatus (not shown) may transmit an image which is polarized and output in the display apparatus 100 and to do so, may comprise the front polarizer 251, the liquid cell 252, the rear polarizer 253, and the input unit 254.

The front polarizer 251 has a polarization light in the same direction as the image polarized and output in the display apparatus 100 and transmits the image. For example, the display apparatus 100 may output an image which is polarized in a horizontal direction and in this case, the polarizer 251 transmits only an image which is polarized in a horizontal direction. However, if a glasses apparatus (not shown) has the polarizer 251 which transmits only a polarized image in a vertical direction, the glasses apparatus (not shown) may not transmit an image which is polarized in a horizontal direction. The front polarizer 251 blocks other ambient light having different light axis except for an image which is intrinsically polarized in the display apparatus 100.

The liquid cell 252 is a component of which orientation is switched according to a driving voltage, and changes the characteristics of polarized light according to the switched orientation. The characteristics of polarized light may refer to the phase or direction of polarized light. That is, That is, if polarized light enters and a specific driving voltage is applied to a liquid cell for orientation, the wavelength of the incident light may be delayed. For instance, the liquid cell may be an active retarder, and the polarization direction of a linearly-polarized image may be changed according to the specific applied voltage (phase change), or the direction of circular polarization may be reversed by changing the phase of the circular polarization. The characteristics of polarization may be changed appropriately to transmit incident light (left-eye or right-eye) by opening a glasses apparatus or to block incident light by closing the glasses apparatus. As an exemplary embodiment, if there is no voltage applied, linear light may be rotated by 90 degree (change phase difference as much as λ/2), and if a voltage is applied, the liner light may be transmitted without affecting the incident light.

Although the liquid cell is not technically limited in its embodiment, it may be realized as a TN ECB (electrically controllable birefringence) cell or a TN OCB (optically compensated bend) cell in an exemplary embodiment. If the liquid cell is realized as a twist TN cell and an applied voltage is '0', the incident light is rotated and a polarization direction may be changed by 90 degree by the twisting of liquid molecules. That is, if the incident light is linearly polarized, the polarization direction is rotated by 90 degrees, if the incident light is left-circularly polarized, it is changed to the right-circular polarized light, and the right-circular polarized light is changed to the left-circular polarized light.

The rear polarizer 253 is a component that re-polarizes an image which transmits a liquid cell, and transmits only a polarization element in a cross direction with respect to output polarized light of a display apparatus. Accordingly, after a glasses apparatus (not shown) is opened, a polarized image of the display apparatus should be in a state where it can pass through the rear polarizer 253 through manipulation of a liquid cell. On the other hand, if a shutter glasses is closed, the liquid cell should be converted such that the polarized output image of the display apparatus is perpendicular with respect to a polarization axis of the rear polarizer 253.

Referring to an operation of a glasses apparatus, if a shutter is opened, an image which is output from a display apparatus and polarized in a vertical direction passes through the front polarizer 251, and the liquid cell 252 transmits the image and makes the polarization direction consistent with the polarization axis of the rear polarizer 253. Accordingly, the image reaches human eyes through the glasses apparatus. On the other hand, if a shutter is closed, an image which is output from a display apparatus and polarized in a vertical direction passes through the front polarizer 251, and the liquid cell 252 also let the image pass through. Accordingly, the polarization direction crosses at right angles and thus, the polarized image does not pass through the glasses apparatus and does not reach human eyes.

The input unit 254 is a component through which a user inputs a control command to control the liquid cell 252 of a glasses apparatus. That is, a user may change the polarization direction of a polarizing lens electrically by manipulating the input unit 254. The input unit 254 may include a button, a touch pad and a toggle button to change the polarization direction of a polarizing lens. For example, if a user who is watching content 2 through a glasses apparatus 200-11 presses a toggle button to change the polarization direction of a polarizing lens, the glasses apparatus 200-11 changes the polarization direction of the polarizing lens to a vertical direction and accordingly, the user may watch content 1.

The control unit 255 controls overall operations of the glasses apparatus 200'. In particular, the operation of the liquid cell 252 is controlled as described above according to an input of the input unit 254.

Herein, the glasses apparatuses 200-11, 200-12 may change the polarization direction of a left-eye lens and a right-eye lens respectively. If the polarization direction of a left-eye lens and a right-eye lens becomes different from each other as one of the polarization direction of the left-eye lens and the right-eye lens is changed, the glasses apparatus may be used to watch 3D contents.

In the case of a 3D display apparatus based on a polarization light method, a plurality of viewers watch the same content and thus, there is no need for communication between the display apparatus 100 and the glasses apparatus 200. However, if each of a plurality of viewers is watching different contents, the glasses apparatus 200 needs to communicate with the display apparatus 100. For example, the glasses apparatuses 200-11, 200-12 may receive audio data corresponding to each content from the interface unit 160 of the display apparatus 100 and output the audio data through an audio output unit (not shown), or may transmit a control command input through the input unit 254 to the display apparatus 100. To do so, the glasses apparatuses 200-11, 200-12 may further comprise an interface unit (not shown) which is connected to the display apparatus 100 to perform communication. As the interface unit in a glasses apparatus has already been explained above with respect to FIG. 6, further description will not be provided.

Meanwhile, if contents are watched using a glasses apparatus, there may be a mode for providing a plurality of contents and a mode for providing 3D contents. If the glasses apparatuses 200-11, 200-12 may change a polarization direction for each of the left-eye lens and the right-eye lens, the display apparatus 100 may display a message indicating that a user should change the polarization direction of one of the left-eye lens and the right-eye lens. The user wearing the glasses apparatus may change the polarization direction by manipulating the input unit 254.

If the glasses apparatus cannot change the polarization direction of each of the left-eye lens and the right-eye lens, a message indicating that a user should change the glasses apparatus may be displayed when a mode is changed.

According to various exemplary embodiments, mode conversion of the display apparatus 100 is performed based on an operational status of each of the plurality of glasses apparatuses 200 and thus, a user may watch a clear image with high resolution without manipulating a mode manually and consume less power.

Although a few exemplary embodiments have been shown and described, it will be appreciated by those of skill in the art that changes may be made in to these exemplary embodiments without departing from the scope of the invention which is defined in the claims.

## Claims

1. A display apparatus, comprising:
a signal processing unit (120) which composes image frames by processing each of a plurality of contents;
a display unit (130) which outputs a plurality of content views by combining image frames of each content;
a sync signal generating unit (140) which generates a sync signal for synchronizing the plurality of content views with a plurality of glasses apparatuses (200);
an interface unit (150) which transmits the sync signal to the glasses apparatus (200);
and
a control unit (160) which operates in one of a single view mode and a multi view mode and performs mode conversion in accordance with an operation status of each of the plurality of glasses apparatuses (200).

2. The apparatus as claimed in claim 1, wherein the control unit (160) converts the mode to the single view mode if the glasses apparatus (200) matched with content views except for one of the plurality of content views is turned off while being operated in the multi view mode.

3. The apparatus as claimed in claim 1 or 2, wherein the multi view mode is divided into a plurality of multi view modes in accordance with a number of the content views,
wherein the control unit (160) converts the mode to a multi view mode corresponding to the number of remaining content views when the glasses apparatus (200) matched with at least one content view is turned off while the control unit (160) is being operated in one of the plurality of multi view modes.

4. The apparatus as claimed in any of claims 1 to 3,
wherein when the interface unit (150) receives from the glasses apparatus (200) a user command to convert a pairing channel of the glasses apparatus (200), the control unit (160) controls the sync signal generating unit (140) to generate a sync signal corresponding to a new content view among the plurality of content views and to transmit the generated sync signal to the glasses apparatus (200).

5. The apparatus as claimed in claim 4,
wherein the user command is inputted through at least one switching button on the glasses apparatus (200).

6. The apparatus as claimed in claim 4 or 5,
wherein the new content view is different from a content view which has been watched previously by using the glasses apparatus (200).

7. The apparatus as claimed in claim 4, 5 or 6,
wherein when the number of content views is changed because of the user command, the control unit (160) performs the mode conversion.

8. The apparatus as claimed in any preceding claim, further comprising:
a plurality of receiving units (110) which receive the plurality of contents;

9. The apparatus as claimed in claim 8,
wherein the plurality of receiving units (110) comprises at least one of a corded interface, a broadcast tuner, an interface connected with a recordable medium, and a wireless interface.

10. A mode converting method fur use in a display apparatus, comprising:
composing image frames by processing each of a plurality of contents;
outputting a plurality of content views by combining the image frames of each content;
generating a sync signal for synchronizing the plurality of content views and a plurality of glasses apparatuses (200);
transmitting the sync signal to the glasses apparatus (200); and
performing a mode conversion in accordance with an operation status of each of the plurality of glasses apparatuses (200).

11. The method as claimed in claim 10, wherein performing the mode conversion comprises converting a mode to a single view mode when each of the glasses apparatuses (200) matched with content views is turned off, except for one of the glasses apparatus (200) matched with one of the plurality of content views.

12. The method as claimed in claim 10 or 11, wherein performing the mode conversion comprises converting to one of a plurality of multi view modes wherein the selected multi-view mode corresponds to the number of remaining content views, when one of the glasses apparatus (200) which is matched with one content view from among the plurality of content views is turned off.

13. The method as claimed in claim 10, 11 or 12,
wherein if the display apparatus receives, from one of the glasses apparatus (200), a user command to convert a pairing channel of the glasses apparatus (200), a sync signal corresponding to a new content view among the plurality of content views is generated and the generated sync signal is transmitted to the glasses apparatus (200).

14. The method as claimed in claim 13,
wherein the user command is inputted through at least one switching button on the glasses apparatus (200).

15. The method as claimed in claim 13,
wherein the new content view is different from a content view which has been watched previously by using the glasses apparatus (200).
